# EUROPEAN PATENT SPECIFICATION

(11) **EP 4 358 548 B1**
(45) Date of publication and mention of the grant of the patent: **19.08.2026**
(21) Application number: 22836886.6
(22) Date of filing: 05.07.2022
(51) Int. Cl.: H04W 4/02, H04W 4/40

(54) **COMMUNICATION METHOD AND APPARATUS, AND STORAGE MEDIUM**
KOMMUNIKATIONSVERFAHREN UND -VORRICHTUNG SOWIE SPEICHERMEDIUM
PROCÉDÉ ET APPAREIL DE COMMUNICATION ET SUPPORT DE STOCKAGE

(30) Priority: 09.07.2021 CN 202110780374
(43) Date of publication of application: 24.04.2024
(73) Proprietor: Yinwang Intelligent Technologies Co., Ltd., Shenzhen, Guangdong 518129 (CN)
(72) Inventor: YANG, Miao, Shenzhen, Guangdong 518129 (CN); FEI, Wenkai, Shenzhen, Guangdong 518129 (CN); LIU, Qiang, Shenzhen, Guangdong 518129 (CN); LIU, Jianqin, Shenzhen, Guangdong 518129 (CN)
(74) Representative: Gill Jennings & Every LLP
(86) International application number: PCT/CN2022/103796
(87) International publication number: WO 2023/280135

(56) References cited:
- WO-A1-2020/257642
- CN-A- 108 253 975
- CN-A- 109 740 469
- CN-A- 111 311 675
- CN-A- 111 881 244
- US-A1- 2019 357 026
- US-A1- 2020 162 908

## Description

### TECHNICAL FIELD

This application relates to the field of intelligent transportation technologies and the field of intelligent vehicle technologies, and in particular, to a communication method and apparatus, a storage medium, and a program.

### BACKGROUND

Currently, in an intelligent transportation communication system, a vehicle may obtain road condition information or receive dynamic event information in a timely manner through vehicle to vehicle (vehicle to vehicle, V2V) communication, vehicle to infrastructure (vehicle to infrastructure, V2I) communication, vehicle to pedestrian (vehicle to pedestrian, V2P) communication, and vehicle to network (vehicle to network, V2N) communication. These communication modes may be collectively referred to as V2X communication (where X represents anything).

In a V2X communication process, position information needs to be transferred by using a V2X message. For example, a road side infrastructure may transfer a traffic event, a traffic sign, or position information of a participant to the vehicle. The position information may be expressed in a form of absolute position obtained through deflection calculation, but the deflection calculation causes a loss of precision of the position information. The position information may also be expressed in a form of relative position relative to a map element. However, currently, map elements defined by map vendors are not unified, and therefore, it is difficult to accurately transfer the position information between devices that uses different maps.

WO 2020/257642 A1 describes that a management container provides basic information about the originating intelligent transportation system (ITS) station, regardless of whether it is a vehicle or an RSU type station. Regardless of which type of ITS-S disseminates a collective perception message (CPM), the management container provides information regarding the type of the originating ITS-S and a reference position of the originating ITS-S. The reference position is used for referencing objects relative to a provided global position. The reference point is used to determine the offset to other data points. A perceived object container may be added for every object that has been perceived by an ITS station. The perceived object container provides information about a detected object with respect to the disseminating ITS station. Every object is described by at least providing the distance and speed in the x/y plane of the respective coordinate system with respect to a station's reference point, for the case of a vehicle as disseminating ITS station. An objectID is assigned to each detected object.
US 2019/357026 A1 describes a V2I message transmission method for a V2X communication device. The V2I message includes a first container, which includes information commonly used for V2I services, and a second container, which includes information used for a particular V2I service. The common container may include reference position information of a sequence form, which may provide a plurality of reference position values according to a size of the sequence. For example, the reference position information of a sequence form may provide a reference position related to a construction segment of each lane of a road. The V2X communication device may provide information about a restricted area of a work zone using reference position information of a sequence form of a common container and lane closed segment information of an application container.

### SUMMARY

This application provides a communication method and apparatus, a storage medium, and a program, to improve accuracy and compatibility of transferring position information in a V2X message.

According to a first aspect, this application provides a communication method, which may be applied to a transmitter. The communication method includes: generating a V2X message, where the V2X message includes reference object indication information and position indication information, the reference object indication information indicates a first at least one reference object, and the position indication information indicates a position of a target object relative to the first at least one reference object; and sending the V2X message.

The reference object includes a reference point and/or a reference line. The reference line includes one or more of the following: a straight line, a dashed line, and a broken line. For example, when the reference object is a reference point, the reference object may be a point that may be determined based on a map element, for example, an end point of a stop line, an end point of a lane center line, an end point of a road center line, an end point of a lane line, an end point of a road edge line, a crossover point of a lane line and a stop line, a crossover point of a lane line and a lane line, a crossover point of a road edge line and a road edge line, a lane line change point, a center point of an external frame of a traffic marking, a vertex of an external polygon of a traffic marking, a ground projection point corresponding to a center point of an external frame of a traffic sign, a ground projection point corresponding to a center point of an external frame of a traffic signal light frame, or the like. When the reference object is a reference line, the reference object may be a map element, or may be a line that may be determined based on the map element. For example, the reference line may be a stop line, a lane line, a lane center line, a road center line, a road edge line, or the like.

The reference object is used to provide a reference for a position expression of the target object. Specifically, position information of the target object may be expressed by using a relative position of the target object relative to the reference object.

The V2X message may be any one of the following messages: an RSI message, an RSM message, and a SPAT message.

In a possible implementation, the reference object indication information may indicate an identifier, in a geographic area, of each of the at least one reference object.

In a possible implementation, the reference object indication information further indicates an identifier of a geographic area in which each of the at least one reference object is located.

In a possible implementation, the reference object indication information may indicate a position of each of the at least one reference object.

In the foregoing process, the transmitter transfers relative position information relative to the reference object to the receiver by using the V2X message, and does not need to perform deflection. In addition, the V2X message indicates a reference object on which position information is based. This helps accurately transfer the position information between devices that use different maps.

According to the first aspect, the reference object indication information includes first reference object indication information and second reference object indication information. The first reference object indication information indicates a first reference object, and the second reference object indication information indicates a second reference object. The position indication information includes first position information and second position information. The first position information indicates a position of the target object relative to the first reference object, and the second position information indicates a position of the target object relative to the second reference object.

In the foregoing implementation, the V2X message not only transfers the position of the target object relative to the first reference object, but also transfers the position of the target object relative to the second reference object. In this way, after receiving the V2X message, the receiver may locate the target object based on the position of the target object relative to the first reference object, or may locate the target object based on the position of the target object relative to the second reference object, or may locate the target object in combination with the position of the target object relative to the first reference object and the position of the target object relative to the second reference object. This improves flexibility and accuracy of processing by the receiver. Further, after one reference object is invalid, the receiver may locate the target object based on another reference object. This ensures robustness of locating and processing by the receiver.

In a possible implementation, the target object is an event. The position indication information includes first area information and second area information. The first area information indicates a first geographic area in which the event occurs, and the second area information indicates a second geographic area affected by the event.

In the foregoing implementation, a position expression of the event is more accurate by describing a position of the event based on the first area information and the second area information than describing the position of the event based on a coordinate point.

In a possible implementation, the V2X message further includes reference object information. The reference object information indicates an identifier, in a geographic area, of each reference object in a second at least one reference object, and indicates a position of each reference object in the second at least one reference object. The second at least one reference object includes the first at least one reference object.

In the foregoing implementation, when transferring the relative position information of the target object to the receiver by using the V2X message, the transmitter further carries the reference object information in the V2X message for sending, so that the receiver may accurately locate, based on the reference object information, a reference object used when the transmitter expresses the relative position information of the target object. In this way, the receiver locates the target object based on a position of the located reference object. This improves locating accuracy of the target object.

In a possible implementation, the communication method further includes: sending reference object information, where the reference object information indicates an identifier, in a geographic area, of each reference object in a second at least one reference object, and indicates a position of each reference object in the second at least one reference object, and the second at least one reference object includes the first at least one reference object.

The foregoing implementation is applicable to a scenario in which the reference object information indicates a relatively large quantity of reference objects, so that the reference object information and the V2X message are separately sent. This avoids excessively high air interface overheads occupied by the V2X message.

In a possible implementation, both the reference object information and the V2X message are periodically sent messages, and a sending frequency of the reference object information is not higher than a sending frequency of the V2X message.

In the foregoing implementation, when the sending frequency of the reference object information and the sending frequency of the V2X message are the same, the reference object information and the V2X message may be sent in a same period, and therefore, the implementation is simple. When the sending frequency of the reference object information is lower than the sending frequency of the V2X message, the reference object information is sent at a reduced frequency, so that air interface overheads can be further reduced.

In a possible implementation, when a version of the reference object information of the transmitter is updated, the transmitter may immediately send updated reference object information. This can ensure that the receiver learns the updated reference object information in a timely manner, so that accuracy of a locating result of the target object by the receiver is ensured.

In a possible implementation, the second at least one reference object is the first at least one reference object. In this way, in the reference object information, only related information of a reference object that is actually used for a relative position expression of the target object is sent. This can prevent the reference object information from carrying much related information of an invalid reference object, and reduce air interface overheads of the reference object information.

In a possible implementation, the V2X message is a periodically non-repeated message, and the reference object information is a periodically repeated message.

In a possible implementation, the reference object information includes first reference object information and second reference object information, and the first reference object information and the second reference object information are sent in packets. The first reference object information indicates an identifier, in the geographic area, of each reference object in a third at least one reference object, and indicates a position of each reference object in the third at least one reference object, the second reference object information indicates an identifier, in the geographic area, of each reference object in a fourth at least one reference object, and indicates a position of each reference object in the fourth at least one reference object. The second at least one reference object includes the third at least one reference object and the fourth at least one reference object.

In the foregoing implementation, the reference object information is sent in packets. A mode of sending in packets is applicable to a scenario with a large quantity of reference objects. Through the mode of sending in packets, air interface overheads of the reference object information can be reduced.

In a possible implementation, the reference object information further indicates at least one of the following content: current version information, previous version information, an update status of each reference object, a type of each reference object, a priority of each reference object, position precision of each reference object, confidence of each reference object, a map element associated with each reference object, and an identifier of the geographic area. In this way, the reference object information describes each reference object more abundantly, so that the reference object can be located more accurately.

According to a second aspect, this application provides a communication method, including: receiving a V2X message, where the V2X message includes reference object indication information and position indication information, the reference object indication information indicates a first at least one reference object, and the position indication information indicates a position of a target object relative to the first at least one reference object; and determining target position information of the target object based on the reference object indication information and the position indication information.

In the foregoing process, the transmitter transfers relative position information of the target object relative to the reference object to the receiver by using the V2X message, and does not need to perform deflection. This avoids a deflection error and ensures locating accuracy.

According to the second aspect, the reference object indication information includes first reference object indication information and second reference object indication information. The first reference object indication information indicates a first reference object, and the second reference object indication information indicates a second reference object. The position indication information includes first position information and second position information. The first position information indicates a position of the target object relative to the first reference object, and the second position information indicates a position of the target object relative to the second reference object.

Optionally, the receiver may determine the target position information of the target object based on the first reference object indication information and the first position information. Alternatively, the receiver may determine the target position information of the target object based on the second reference object indication information and the second position information. In other words, a terminal device may locate the target object based on the first reference object or the second reference object.

Optionally, when determining that the first reference object is better than the second reference object, the receiver determines the target position information of the target object based on the first reference object indication information and the first position information.

For example, the receiver may determine that the first reference object is better than the second reference object when at least one of the following conditions is met: a distance between the first reference object and the receiver is less than a distance between the second reference object and the receiver; position precision of the first reference object is higher than position precision of the second reference object; confidence of the first reference object is higher than confidence of the second reference object; and a priority of the first reference object is higher than a priority of the second reference object.

Optionally, the receiver may determine first candidate position information of the target object based on the first reference object indication information and the first position information, determine second candidate position information of the target object based on the second reference object indication information and the second position information, and determine the target position information of the target object based on the first candidate position information and the second candidate position information. In other words, the terminal device first locates the target object separately based on the first reference object and the second reference object, to obtain two pieces of candidate position information, and then comprehensively considers the two pieces of candidate position information, to obtain a final locating result of the target object. For example, coordinate calculation is performed on the two pieces of candidate position information to obtain the final locating result. In this way, because the target object is located based on a plurality of reference objects, locating precision is improved.

In a possible implementation, the target object is an event. The position indication information includes first area information and second area information. The first area information indicates a first geographic area in which the event occurs, and the second area information indicates a second geographic area affected by the event.

In the foregoing implementation, a position expression of the event is more accurate by describing a position of the event based on the first area information and the second area information than describing the position of the event based on a coordinate point.

In a possible implementation, the V2X message further includes reference object information. The reference object information indicates an identifier, in a geographic area, of each reference object in a second at least one reference object, and indicates a position of each reference object in the second at least one reference object. The second at least one reference object includes the first at least one reference object.

In the foregoing implementation, when transferring the relative position information of the target object to the receiver by using the V2X message, the transmitter further carries the reference object information in the V2X message for sending, so that the receiver may accurately locate, based on the reference object information, a reference object used when the transmitter expresses the relative position information of the target object. In this way, the receiver locates the target object based on a position of the located reference object. This improves locating accuracy of the target object.

In a possible implementation, the communication method further includes: receiving reference object information, where the reference object information indicates an identifier, in a geographic area, of each reference object in a second at least one reference object, and indicates a position of each reference object in the second at least one reference object, and the second at least one reference object includes the first at least one reference object.

The foregoing implementation is applicable to a scenario in which the reference object information indicates a relatively large quantity of reference objects. The reference object information is carried in the reference object information for sending, so that the reference object information and the V2X message are separately sent. This avoids excessively high air interface overheads occupied by the V2X message.

In a possible implementation, both the reference object information and the V2X message are periodically sent messages, and a sending frequency of the reference object information is not higher than a sending frequency of the V2X message.

In the foregoing implementation, when the sending frequency of the reference object information and the sending frequency of the V2X message are the same, the reference object information and the V2X message may be sent in a same period, and therefore, the implementation is simple. When the sending frequency of the reference object information is lower than the sending frequency of the V2X message, the reference object information is sent at a reduced frequency, so that air interface overheads can be further reduced.

In a possible implementation, the second at least one reference object is the first at least one reference object. In this way, in the reference object information, only related information of a reference object that is actually used for a relative position expression of the target object is sent. This can prevent the reference object information from carrying much related information of an invalid reference object, and reduce air interface overheads of the reference object information.

In a possible implementation, the V2X message is a periodically non-repeated message, and the reference object information is a periodically repeated message.

In a possible implementation, the reference object information includes first reference object information and second reference object information, and the first reference object information and the second reference object information are received in packets. The first reference object information indicates an identifier, in the geographic area, of each reference object in a third at least one reference object, and indicates a position of each reference object in the third at least one reference object, the second reference object information indicates an identifier, in the geographic area, of each reference object in a fourth at least one reference object, and indicates a position of each reference object in the fourth at least one reference object. The second at least one reference object includes the third at least one reference object and the fourth at least one reference object.

In the foregoing implementation, the reference object information is sent in packets. A mode of sending in packets is applicable to a scenario with a large quantity of reference objects. Through the mode of sending in packets, air interface overheads of the reference object information can be reduced.

In a possible implementation, the reference object information further indicates at least one of the following content: current version information, previous version information, an update status of each reference object, a type of each reference object, a priority of each reference object, position precision of each reference object, confidence of each reference object, a map element associated with each reference object, and an identifier of the geographic area. In this way, the reference object information describes each reference object more abundantly, so that the reference object can be located more accurately.

In a possible implementation, the determining target position information of the target object based on the reference object indication information and the position indication information includes: determining the target position information of the target object based on the reference object indication information, the position indication information, and the reference object information.

In a possible implementation, the determining the target position information of the target object based on the reference object indication information, the position indication information, and the reference object information includes: determining a position of the first at least one reference object based on the reference object indication information and the reference object information; and determining the target position information of the target object based on the position of the first at least one reference object and the position indication information.

According to a third aspect, this application provides a communication apparatus, including: a generation module, configured to generate a V2X message, where the V2X message includes reference object indication information and position indication information, the reference object indication information indicates a first at least one reference object, and the position indication information indicates a position of a target object relative to the first at least one reference object; and a sending module, configured to send the V2X message.

According to the third aspect, the reference object indication information includes first reference object indication information and second reference object indication information. The first reference object indication information indicates a first reference object, and the second reference object indication information indicates a second reference object. The position indication information includes first position information and second position information. The first position information indicates a position of the target object relative to the first reference object, and the second position information indicates a position of the target object relative to the second reference object.

In a possible implementation, the target object is an event. The position indication information includes first area information and second area information. The first area information indicates a first geographic area in which the event occurs, and the second area information indicates a second geographic area affected by the event.

In a possible implementation, the V2X message further includes reference object information. The reference object information indicates an identifier, in a geographic area, of each reference object in a second at least one reference object, and indicates a position of each reference object in the second at least one reference object. The second at least one reference object includes the first at least one reference object.

In a possible implementation, the sending module is further configured to: send reference object information. The reference object information includes reference object information. The reference object information indicates an identifier, in a geographic area, of each reference object in a second at least one reference object, and indicates a position of each reference object in the second at least one reference object. The second at least one reference object includes the first at least one reference object.

In a possible implementation, both the reference object information and the V2X message are periodically sent messages, and a sending frequency of the reference object information is not higher than a sending frequency of the V2X message.

In a possible implementation, the second at least one reference object is the first at least one reference object.

In a possible implementation, the V2X message is a periodically non-repeated message, and the reference object information is a periodically repeated message.

In a possible implementation, the reference object information includes first reference object information and second reference object information, and the first reference object information and the second reference object information are sent in packets. The first reference object information includes the first reference object information, and the second reference object information includes the second reference object information. The first reference object information indicates an identifier, in the geographic area, of each reference object in a third at least one reference object, and indicates a position of each reference object in the third at least one reference object. The second reference object information indicates an identifier, in the geographic area, of each reference object in a fourth at least one reference object, and indicates a position of each reference object in the fourth at least one reference object. The second at least one reference object includes the third at least one reference object and the fourth at least one reference object.

In a possible implementation, the reference object information further indicates at least one of the following content: current version information, previous version information, an update status of each reference object, a type of each reference object, a priority of each reference object, position precision of each reference object, confidence of each reference object, a map element associated with each reference object, and an identifier of the geographic area.

According to a fourth aspect, this application provides a communication apparatus, including: a receiving module, configured to receive a V2X message, where the V2X message includes reference object indication information and position indication information, the reference object indication information indicates a first at least one reference object, and the position indication information indicates a position of a target object relative to the first at least one reference object; and a determining module, configured to determine target position information of the target object based on the reference object indication information and the position indication information.

According to the fourth aspect, the reference object indication information includes first reference object indication information and second reference object indication information. The first reference object indication information indicates a first reference object, and the second reference object indication information indicates a second reference object. The position indication information includes first position information and second position information. The first position information indicates a position of the target object relative to the first reference object, and the second position information indicates a position of the target object relative to the second reference object.

In a possible implementation, the target object is an event. The position indication information includes first area information and second area information. The first area information indicates a first geographic area in which the event occurs, and the second area information indicates a second geographic area affected by the event.

In a possible implementation, the V2X message further includes reference object information. The reference object information indicates an identifier, in a geographic area, of each reference object in a second at least one reference object, and indicates a position of each reference object in the second at least one reference object. The second at least one reference object includes the first at least one reference object.

In a possible implementation, the receiving module is further configured to: receive reference object information. The reference object information includes reference object information. The reference object information indicates an identifier, in a geographic area, of each reference object in a second at least one reference object, and indicates a position of each reference object in the second at least one reference object. The second at least one reference object includes the first at least one reference object.

In a possible implementation, both the reference object information and the V2X message are periodically sent messages, and a sending frequency of the reference object information is not higher than a sending frequency of the V2X message.

In a possible implementation, the second at least one reference object is the first at least one reference object.

In a possible implementation, the V2X message is a periodically non-repeated message, and the reference object information is a periodically repeated message.

In a possible implementation, the reference object information includes first reference object information and second reference object information, and the first reference object information and the second reference object information are received in packets. The first reference object information indicates an identifier, in the geographic area, of each reference object in a third at least one reference object, and indicates a position of each reference object in the third at least one reference object, the second reference object information indicates an identifier, in the geographic area, of each reference object in a fourth at least one reference object, and indicates a position of each reference object in the fourth at least one reference object. The second at least one reference object includes the third at least one reference object and the fourth at least one reference object.

In a possible implementation, the reference object information further indicates at least one of the following content: current version information, previous version information, an update status of each reference object, a type of each reference object, a priority of each reference object, position precision of each reference object, confidence of each reference object, a map element associated with each reference object, and an identifier of the geographic area.

In a possible implementation, the determining module is specifically configured to: determine the target position information of the target object based on the reference object indication information, the position indication information, and the reference object information.

In a possible implementation, the determining module is specifically configured to: determine a position of the first at least one reference object based on the reference object indication information and the reference object information; and determine the target position information of the target object based on the position of the first at least one reference object and the position indication information.

According to a fifth aspect, this application provides a communication apparatus, including a processor and a memory. The memory stores a computer program, and the processor runs the computer program to implement the method according to any one of the first aspect or the implementations of the first aspect, or implement the method according to any one of the second aspect or the implementations of the second aspect.

The communication apparatus according to any implementation of the third, fourth, or fifth aspect may be a cloud device, a road side device, or a terminal device. The cloud device is, for example, a map server, or a software module, a hardware module, a chip, or a chip system in the map server. The road side device is, for example, a road side unit, or a software module, a hardware module, a chip, or a chip system in the road side unit. The terminal device is, for example, a vehicle, or a software module, a hardware module, a chip, or a chip system in the vehicle. This application includes but is not limited to what is described herein.

According to a sixth aspect, this application provides a vehicle, including the communication apparatus according to any implementation of the third aspect, the fourth aspect, or the fifth aspect.

According to a seventh aspect, this application provides a computer-readable storage medium. The computer-readable storage medium stores a computer program. When the computer program is run, the method according to any one of the first aspect or the implementations of the first aspect is implemented, or the method according to any one of the second aspect or the implementations of the second aspect is implemented.

According to an eighth aspect, this application provides a computer program product. The computer program product includes a computer program, and when the computer program is run, the method according to any one of the first aspect or the implementations of the first aspect is implemented, or the method according to any one of the second aspect or the implementations of the second aspect is implemented.

It should be understood that the third aspect to the eighth aspect of this application correspond to the technical solutions of the first aspect or the second aspect of this application, and beneficial effects achieved by the aspects and the corresponding feasible implementations are similar. Details are not described again.

### BRIEF DESCRIPTION OF DRAWINGS

FIG. 1 is a schematic diagram of an application scenario according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic diagram of a sending manner of reference object information and a V2X message according to an embodiment of this application;
FIG. 6 is a schematic diagram of another sending manner of reference object information and a V2X message according to an embodiment of this application;
FIG. 7 is a schematic diagram of still another sending manner of reference object information and a V2X message according to an embodiment of this application;
FIG. 8 is a schematic diagram of a field structure of an RSI message according to an embodiment of this application;
FIG. 9A is a schematic diagram of a field structure of an RSM message according to an embodiment of this application;
FIG. 9B is a schematic diagram of a field structure of another RSM message according to an embodiment of this application;
FIG. 10 is a schematic diagram of a field structure of a SPAT message according to an embodiment of this application;
FIG. 11 is a schematic diagram of an EP-type reference point according to an embodiment of this application;
FIG. 12 is a schematic diagram of a CP-type reference point according to an embodiment of this application;
FIG. 13 is a schematic diagram of another CP-type reference point according to an embodiment of this application;
FIG. 14 is a schematic diagram of still another CP-type reference point according to an embodiment of this application;
FIG. 15 is a schematic diagram of a PV-type reference point according to an embodiment of this application;
FIG. 16 is a schematic diagram of an LCP-type reference point according to an embodiment of this application;
FIG. 17 is a schematic diagram of a TM-type reference point according to an embodiment of this application;
FIG. 18 is a schematic diagram of a TS-type reference point according to an embodiment of this application;
FIG. 19A is a schematic diagram of an organization manner of reference object information according to an embodiment of this application;
FIG. 19B is a schematic diagram of another organization manner of reference object information according to an embodiment of this application;
FIG. 19C is a schematic diagram of still another organization manner of reference object information according to an embodiment of this application;
FIG. 20 is a schematic diagram of a reference object layer according to an embodiment of this application;
FIG. 21 is a schematic diagram of a structure of a communication apparatus according to an embodiment of this application;
FIG. 22 is a schematic diagram of a structure of another communication apparatus according to an embodiment of this application; and
FIG. 23 is a schematic diagram of a structure of still another communication apparatus according to an embodiment of this application.

### DESCRIPTION OF EMBODIMENTS

For ease of understanding the following embodiments, the following description is first provided.

First, for ease of differentiation and understanding, the following definitions are provided. An information generation apparatus carries a first map, and an information using apparatus carries a second map. The first map and the second map may be from a same map vendor, or may be from different map vendors. This is not limited in embodiments of this application. Position points that are on the first map and that are used for position point matching are referred to as a first position point set. Position points that are on the second map and that may match the first position point set are referred to as a second position point set, and position points in the second position point set are referred to as a second at least one position point. Position points used for a position expression of a position reference point on the first map are referred to as a first at least one position point, and the first at least one position point is a subset of the first position point set. Position points used to calculate a position reference point on the second map are referred to as a third at least one position point.

Second, "sending" in embodiments of this application may be performed between devices, for example, may be performed between different cloud devices, or may be performed between different terminal devices, or may be performed between different road side devices. Alternatively, "sending" may be performed between a cloud device and a terminal device, or may be performed between a cloud device and a road side device, or may be performed between a terminal device and a road side device. For another example, "sending" may be performed in a device, for example, "sending" is performed between components, between units, between chips, between software modules, or between hardware modules in the device through a bus, a cabling, or an interface. For example, a map may be sent in a same cloud device, or may be sent in a same terminal device, or may be sent in a same road side device.

In embodiments of the present application, "receiving" may be performed between devices, for example, may be performed between different cloud devices, or may be performed between different terminal devices, or may be performed between different road side devices. Alternatively, "receiving" may be performed between a cloud device and a terminal device, or may be performed between a cloud device and a road side device, or may be performed between a terminal device and a road side device. For another example, "receiving" may be performed in a device, for example, "receiving" is performed between components, between units, between chips, between software modules, or between hardware modules in the device through a bus, a cabling, or an interface. For example, a map may be received in a same cloud device, or may be received in a same terminal device, or may be received in a same road side device.

Third, in embodiments of this application, prefix words such as "first" and "second" are used only to distinguish and describe different things belonging to a same name category, and do not restrict a sequence or a quantity of the things. For example, "first information" and "second information" are only information with different content or purposes, and there is no time sequence relationship or priority relationship between the two. The first information may be one or more pieces of information, and the second information may also be one or more pieces of information.

Fourth, in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent a, b, c, a and b, a and c, b and c, or a, b, and c. Herein, a, b, and c each may be singular or plural.

Fifth, in embodiments of this application, "when" and "if" both mean that an apparatus performs corresponding processing in an objective situation, are not intended to limit time, do not require the apparatus to necessarily have a determining action during implementation, and do not mean any other limitation either.

Sixth, "simultaneously" in embodiments of this application may be understood as being at a same time point, or may be understood as being within a time period, or may be understood as being within a same period. This may be specifically understood with reference to a context.

Seventh, in embodiments of this application, the word like "example" or "for example" is used to represent giving an example, an illustration, or a description. Any embodiment or design solution described as an "example" or "for example" in this application should not be explained as being more preferred or having more advantages than another embodiment or design solution. Exactly, use of the word like "example" or "for example" is intended to present a related concept in a specific manner.

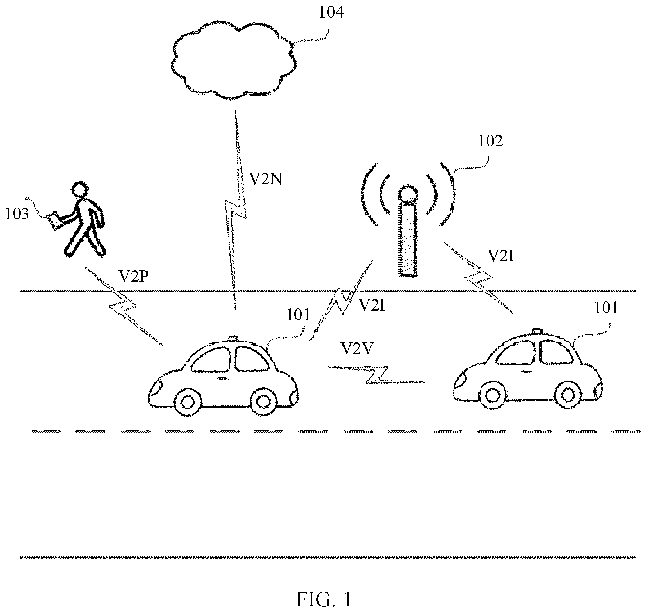

A possible application scenario in embodiments of this application is described first with reference to FIG. 1.

FIG. 1 is a schematic diagram of an application scenario according to an embodiment of this application. The scenario shown in FIG. 1 is a V2X scenario. As shown in FIG. 1, the V2X scenario may include a vehicle 101, a road side infrastructure 102, a pedestrian 103, and a cloud network 104.

V2X is a technology for implementing communication between a vehicle and the outside, where V represents a vehicle, and X represents a vehicle, a pedestrian, a road side infrastructure, a cloud network, or the like. In other words, V2X communication may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, and the like.

With development of network technologies and intelligent vehicle technologies, functions that may be implemented by vehicles through the V2X communication are increasingly enriched. For example, the vehicle may obtain various information services through V2I and V2N communication, including but not limited to traffic signal light information, vehicle information in a nearby area, vehicle navigation information, emergency rescue information, entertainment service information, and the like. The vehicle may obtain information like a speed, a position, a driving status, and a pedestrian activity of a surrounding vehicle in real time through the V2V communication and the V2P communication, and may implement a collision warning function by using an intelligent algorithm, to avoid a traffic accident of the vehicle. The vehicle may further implement functions such as vehicle speed guidance by using the V2I communication, to improve traffic efficiency.

In the V2V communication, electronic devices that communicate with each other may be located in two vehicles, for example, may be handheld devices of users in the vehicles or vehicle-mounted devices. In the V2I communication, electronic devices that communicate with each other may be located in a vehicle and a road side infrastructure. For example, one electronic device may be a handheld device of a user in the vehicle or a vehicle-mounted device, and the other electronic device may be a road side unit (road side unit, RSU). The RSU may be understood as an infrastructure entity that supports a V2X application, and may exchange information with another electronic device that supports the V2X communication. In the V2P communication, electronic devices that communicate with each other may be located in a vehicle and on a pedestrian. In the V2N communication, electronic devices that communicate with each other may be located in a vehicle and a server. In conclusion, a form of an electronic device is not limited in this application, and forms of electronic devices that communicate with each other may be the same or may be different.

A map is closely related to driving of a vehicle. In particular, a high-definition map is used as an important input of an intelligent driving function, and accuracy and effectiveness of high-definition map data affect driving safety of the vehicle. Therefore, an electronic device in a V2X communication network is provided with a high-definition map. The high-definition map is a high-resolution digital map that can update data in real time. The high-definition map is not only a part of a sensing system, but also an important part of system decision-making, and has a plurality of functions such as high-definition locating, auxiliary environment sensing, planning, and decision-making. Compared with a conventional navigation map, the high-definition map provides not only high-precision coordinates, but also detailed data information like a road shape, lane information, course, and a curvature. In addition, when used with big data and artificial intelligence, the high-definition map may further provide real-time data to assist decision-making, so that the vehicle is more intelligent and secure.

In a V2X communication process, position information may need to be transferred between a terminal device, a road side device, and a cloud device. The following describes several scenarios in which position information needs to be transferred by using an example.

Example scenario 1: Position information needs to be transferred between a road side device and a terminal device. For example, the road side device sends ambient environment information to the terminal device. The ambient environment information includes but is not limited to: surrounding vehicle motion information, traffic event information, traffic sign information, traffic light state information, and the like. When the foregoing ambient environment information is sent, detailed and high-definition position information of each piece of dynamic information needs to be expressed.

Example scenario 2: Position information needs to be transferred between a cloud device and a terminal device. For example, the cloud device sends traffic flow information, congestion information, traffic sign information, traffic signal light information, and the like of a current road to the terminal device.

Example scenario 3: Position information needs to be transferred between a terminal device and a terminal device. For example, the terminal device sends position information of the terminal device to another terminal device, or sends position information of a target object sensed by the terminal device.

Example scenario 4: Position information needs to be transferred between a road side device and a cloud device. For example, the road side device sends ambient environment information to the cloud device. The ambient environment information includes but is not limited to: road maintenance information, traffic event information, congestion information, and the like.

In the foregoing scenarios, the terminal device may be a vehicle-mounted terminal device, or may be a user terminal device.

In the foregoing scenarios, when position information needs to be transferred, the position information may be transferred by using a V2X message. For ease of description, the foregoing Example scenario 1 is merely used as an example for description in the following description. Implementations in other scenarios are similar, and are not described one by one by using examples.

When the position information needs to be transferred between the road side device and the terminal device, the position information may be transmitted by using the following V2X message: road side information (road side information, RSI), a road safety message (road safety message, RSM), a signal phase and timing (signal phase and timing, SPAT) message, or the like. The following describes the foregoing V2X messages.

RSI is traffic event information and traffic sign information released by the road side device to the terminal device. RSI transfers some road-related warning information or prompt information, for example, road construction, speed limit prompt, overspeed warning, and public lane warning.

RSM is real-time state information that is of a surrounding participant and that is sent by the road side device to the terminal device. For example, the road side device has a sensing detection capability (for example, a sensor like a camera is installed), and may sense and obtain the real-time state information of the surrounding participant by using the sensing detection capability of the road side device, sort the information into a format defined in the RSM message, and send the format to the terminal device. It can be learned that the road side device sends the RSM message to the terminal device, to help a vehicle detect an ambient environment of the vehicle.

SPAT is state information that is of a traffic signal light and that is sent by the road side device to the terminal device. For example, the road side device is integrated with the traffic signal light, or the road side device may sense the state information of the traffic signal light. The road side device sends a SPAR message to the terminal device, to provide real-time phase information of the traffic signal light for a vehicle.

In some solutions, absolute coordinates (for example, a longitude and a latitude) are usually used to express position information. However, according to a related standard, direct sending of the absolute coordinates is not allowed. Therefore, when the position information is transferred by using the V2X message, the absolute coordinates need to be randomly deflected before being sent. In this way, an error exists in position information received by a receiver, resulting in low locating precision.

To resolve at least one of the foregoing technical problems, embodiments of this application provide a communication method. When transferring position information of a target object by using a V2X message, a transmitter may carry reference object indication information and position indication information in the V2X message. The reference object indication information indicates at least one reference object, and the position indication information indicates a position of the target object relative to the at least one reference object. In this way, the receiver may locate the position of the target object based on the reference object indication information and the position indication information. In the foregoing process, relative position information is transferred between the transmitter and the receiver, so that a deflection error is avoided and locating accuracy is ensured.

Specific embodiments are used below to describe in detail the technical solutions of this application. The following several specific embodiments may be combined with each other, and a same or similar concept or process may not be described again in some embodiments.

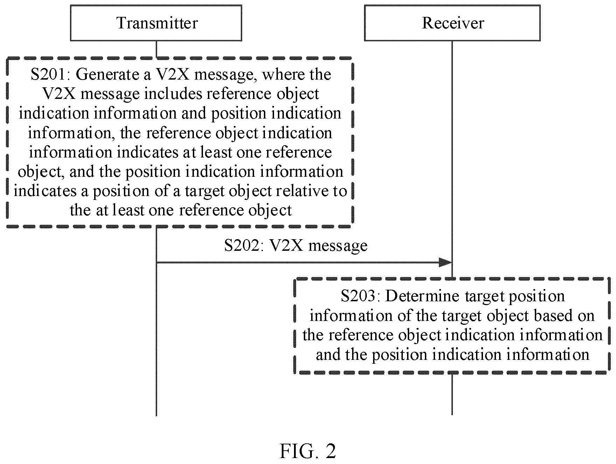

FIG. 2 is a schematic flowchart of a communication method according to an embodiment of this application. As shown in FIG. 2, the method in this embodiment includes the following steps.

S201: A transmitter generates a V2X message, where the V2X message includes reference object indication information and position indication information, the reference object indication information indicates at least one reference object, and the position indication information indicates a position of a target object relative to the at least one reference object.

In an application scenario of this embodiment of this application, the transmitter transfers position information of the target object to a receiver by using the V2X message. The transmitter may be a cloud device, a road side device, or a terminal device. The cloud device may be, for example, a map server, or a software module, a hardware module, or a chip in the map server. The road side device may be, for example, a road side unit, or a software module, a hardware module, or a chip in the road side unit. The terminal device is, for example, a vehicle, or a software module, a hardware module, or a chip in the vehicle.

The receiver may be a cloud device, a road side device, or a terminal device. The cloud device may be, for example, a map server, or a software module, a hardware module, or a chip in the map server. The road side device may be, for example, a road side unit, or a software module, a hardware module, or a chip in the road side unit. The terminal device is, for example, a vehicle, or a software module, a hardware module, or a chip in the vehicle.

The V2X message may be a message used for interaction between the terminal device and the cloud device. Alternatively, the V2X message may be a message used for interaction between the terminal device and the road side device. Alternatively, the V2X message may be a message used for interaction between the terminal device and the terminal device. Alternatively, the V2X message may be a message used for interaction between the terminal device and pedestrian user equipment.

The target object is an object whose position information is to be transferred. The target object may be an element or an event on a road. The element is an element that is in a static state and that exists in a road environment, and includes but is not limited to: a lane line, a traffic sign, a traffic marking, a road edge line, and the like. The event is a dynamic event that occurs in a road environment in real time, and includes but is not limited to: a traffic accident, a real-time road condition, warning information, congestion information, and the like.

For example, the foregoing Example scenario 1 is used as an example. The transmitter may be a road side device, the receiver may be a terminal device, and the V2X message may be any one of the following messages: an RSI message, an RSM message, and a SPAT message.

When the V2X message is an RSI message, the target object may be a traffic event or a traffic sign. In other words, the road side device transfers position information of the traffic event to the terminal device, or transfers event information of the traffic sign to the terminal device. When the V2X message is an RSM message, the target object may be a participant. In other words, the road side device transfers position information of the participant to the terminal device. When the V2X message is a SPAT message, the target object may be a traffic signal light. In other words, the road side device transfers position information of the traffic signal light to the terminal device.

In this embodiment of this application, the reference object includes a reference point and/or a reference line. The reference line includes one or more of the following: a straight line, a dashed line, and a broken line. For example, when the reference object is a reference point, the reference object may be a point that may be determined based on a map element, for example, an end point of a stop line, an end point of a lane center line, an end point of a road center line, an end point of a lane line, an end point of a road edge line, a crossover point of a lane line and a stop line, a crossover point of a lane line and a lane line, a crossover point of a road edge line and a road edge line, a lane line change point, a center point of an external frame of a traffic marking, a vertex of an external polygon of a traffic marking, a ground projection point corresponding to a center point of an external frame of a traffic sign, a ground projection point corresponding to a center point of an external frame of a traffic signal light frame, or the like. When the reference object is a reference line, the reference object may be a map element, or may be a line that may be determined based on the map element. For example, the reference line may be a stop line, a lane line, a lane center line, a road center line, a road edge line, or the like.

The reference object is used to provide a reference for a position expression of the target object. Specifically, the position information of the target object may be expressed by using a relative position of the target object relative to the reference object.

In this embodiment of this application, when the transmitter generates the V2X message, the V2X message includes the reference object indication information and the position indication information. The reference object indication information indicates at least one reference object, and the position indication information indicates the position of the target object relative to the at least one reference object. In this way, the receiver may determine target position information of the target object based on the reference object indication information and the position indication information.

In a possible implementation, the reference object indication information may indicate an identifier, in a geographic area, of each of the at least one reference object. Optionally, the identifier of each reference object in the geographic area may be an identifier of the reference object in an entire map area, for example, a serial number of the reference object in the entire map area. A numbering rule of the reference object may be determined by a map vendor. It may be understood that each reference object has a unique identifier in the entire map area.

In some scenarios, a map is managed by using map tiles. The map tiles are map slice files that include a series of scales and specific map ranges, thereby facilitating map management. For example, a process of forming the map tiles is as follows: Map software (for example, ArcGIS software) processes map data, configures an applied layer solution, and saves the solution; and the map software divides the map into grids based on the solution, to obtain the map tiles. Each map tile has an identifier, and the identifier of the map tile may be a serial number of the map tile. A numbering rule of the map tile may be determined by the map vendor. Optionally, the identifier of each reference object in the geographic area may alternatively be an identifier of the reference object in a map tile, for example, a serial number of the reference object in the map tile in which the reference object is located. A numbering rule of the reference object in each map tile is determined by the map vendor. It may be understood that each reference object has a unique identifier in a map tile in which the reference object is located.

In a possible implementation, the reference object indication information further indicates an identifier of a geographic area in which each of the at least one reference object is located, for example, an identifier of a map tile in which each reference object is located. In this way, one reference object may be uniquely indicated by using the identifier of the geographic area and the identifier of the reference object in the geographic area.

In a possible implementation, the reference object indication information may indicate a position of each of the at least one reference object. Optionally, the position of each reference object may be expressed by using absolute coordinates. Optionally, the position of each reference object may be alternatively expressed by using relative coordinates. Optionally, when the reference object is a map element, a first position may alternatively be expressed by indicating the map element.

In this embodiment of this application, there may be one or more reference objects indicated by the reference object indication information. When there is one reference object indicated by the reference object indication information, the position indication information indicates a position of the target object relative to the reference object. When there are a plurality of reference objects indicated by the reference object indication information, the position indication information indicates a position of the target object relative to each reference object.

At least two reference objects are used. The reference object indication information includes first reference object indication information and second reference object indication information. The first reference object indication information indicates a first reference object, and the second reference object indication information indicates a second reference object. The position indication information includes first position information and second position information. The first position information indicates a position of the target object relative to the first reference object, and the second position information indicates a position of the target object relative to the second reference object.

In this implementation, the V2X message not only transfers the position of the target object relative to the first reference object, but also transfers the position of the target object relative to the second reference object. In this way, after receiving the V2X message, the receiver may locate the target object based on the position of the target object relative to the first reference object, or may locate the target object based on the position of the target object relative to the second reference object, or may locate the target object based on the position of the target object relative to the first reference object and the position of the target object relative to the second reference object. This improves flexibility of processing by the receiver. Further, after one reference object is invalid, the receiver may locate the target object based on another reference object. This ensures robustness of locating and processing by the receiver.

In a possible implementation, the V2X message may simultaneously transfer relative position information of a plurality of target objects. When the V2X message simultaneously transfers relative position information of a plurality of target objects, relative position information of different target objects may be expressed based on different reference objects, or may be expressed based on a same reference object. This is not limited in this embodiment.

S202: The transmitter sends the V2X message to the receiver.

Correspondingly, the receiver receives the V2X message.

S203: The receiver determines target position information of the target object based on the reference object indication information and the position indication information.

In this embodiment of this application, the target position information of the target object indicates an absolute position of the target object. Because the reference object indication information indicates the at least one reference object, and the position indication information indicates the position of the target object relative to the at least one reference object, the receiver may locate the position of the target object on the map based on the reference object indication information and the position indication information, that is, may obtain the target position information of the target object.

Specifically, the receiver determines position information of the at least one reference object based on the reference object indication information, and determines the target position information of the target object based on the position indication information and the position information of the at least one reference object.

When there is one reference object indicated by the reference object indication information, the position indication information indicates a position of the target object relative to the reference object. The receiver determines position information of the reference object based on the reference object indication information, and determines the target position information of the target object based on the position indication information and the position information of the reference object.

At least two reference objects are used. The reference object indication information includes first reference object indication information and second reference object indication information. The first reference object indication information indicates a first reference object, and the second reference object indication information indicates a second reference object. The position indication information includes first position information and second position information. The first position information indicates a position of the target object relative to the first reference object, and the second position information indicates a position of the target object relative to the second reference object.

Optionally, the receiver may determine the target position information of the target object based on the first reference object indication information and the first position information. Alternatively, the receiver may determine the target position information of the target object based on the second reference object indication information and the second position information. In other words, the terminal device may locate the target object based on the first reference object or the second reference object.

For example, when determining that the first reference object is better than the second reference object, the receiver determines the target position information of the target object based on the first reference object indication information and the first position information.

For example, the receiver may determine that the first reference object is better than the second reference object when at least one of the following conditions is met: a distance between the first reference object and the receiver is less than a distance between the second reference object and the receiver; position precision of the first reference object is higher than position precision of the second reference object; confidence of the first reference object is higher than confidence of the second reference object; and a priority of the first reference object is higher than a priority of the second reference object.

Optionally, the receiver may determine first candidate position information of the target object based on the first reference object indication information and the first position information, determine second candidate position information of the target object based on the second reference object indication information and the second position information, and determine the target position information of the target object based on the first candidate position information and the second candidate position information. In other words, the terminal device first locates the target object separately based on the first reference object and the second reference object, to obtain two pieces of candidate position information, and then comprehensively considers the two pieces of candidate position information, to obtain a final locating result of the target object. For example, coordinate calculation is performed on the two pieces of candidate position information to obtain the final locating result. In this way, because the target object is located based on a plurality of reference objects, locating precision is improved.

It should be noted that, the foregoing implementation is described by using an example in which two reference objects are used. When more reference objects are used, implementation principles and technical effects thereof are similar. Details are not described herein again.

The communication method provided in this embodiment includes: The transmitter generates the V2X message, where the V2X message includes the reference object indication information and the position indication information, the reference object indication information indicates at least one reference object, and the position indication information indicates the position of the target object relative to the at least one reference object. The transmitter sends the V2X message to the receiver. The receiver determines the target position information of the target object based on the reference object indication information and the position indication information. In the foregoing process, relative position information of the target object relative to the reference object is transferred between the transmitter and the receiver, so that a deflection error is avoided and locating accuracy is ensured.

Based on the foregoing embodiment, in some scenarios, the transmitter and the receiver may use maps provided by different map vendors, and different map vendors usually have different cartographic rules and cartographic manners, so that different reference objects defined by the different map vendors are different. For example, the transmitter uses a reference object 1 in a map 1 to express relative position information of the target object, and transfers the relative position information to the receiver by using the V2X message. The receiver uses a reference object 1 in a map 2 to locate the target object based on the relative position information. Because the reference object 1 in the map 1 may be different from the reference object 1 in the map 2, a locating result of the receiver may be inaccurate.

To resolve the foregoing technical problem, in embodiments of this application, when transferring the relative position information of the target object to the receiver by using the V2X message, the transmitter may further transfer reference object information to the receiver. The reference object information indicates related information of a reference object defined by the transmitter. The reference object information is transferred, so that when the receiver and the transmitter use maps provided by different map vendors, the receiver may learn the reference object information used by the transmitter. This ensures accuracy of a locating result of the receiver. The following describes how to transfer the reference object information with reference to several specific embodiments.

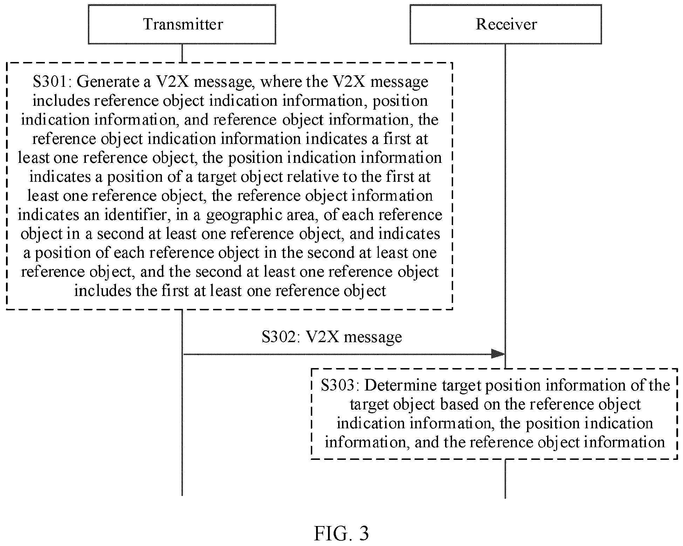

FIG. 3 is a schematic flowchart of another communication method according to an embodiment of this application. As shown in FIG. 3, the method in this embodiment includes the following steps.

S301: A transmitter generates a V2X message. The V2X message includes reference object indication information, position indication information, and reference object information. The reference object indication information indicates a first at least one reference object. The position indication information indicates a position of a target object relative to the first at least one reference object. The reference object information indicates an identifier, in a geographic area, of each reference object in a second at least one reference object, and indicates a position of each reference object in the second at least one reference object. The second at least one reference object includes the first at least one reference object.

A difference between this embodiment and the embodiment shown in FIG. 2 lies in that when the transmitter sends the V2X message, in addition to the reference object indication information and the position indication information, the V2X message further includes the reference object information. The reference object information indicates the identifier, in the geographic area, of each reference object in the second at least one reference object, and indicates the position of each reference object in the second at least one reference object. The second at least one reference object may be all reference objects defined by the transmitter. Alternatively, the second at least one reference object may be all reference objects defined by the transmitter in a geographic area. When expressing relative position information of the target object, the transmitter uses the first at least one reference object for a relative position expression. The second at least one reference object includes the first at least one reference object, or the first at least one reference object is a subset of the second at least one reference object.

For example, it is assumed that the transmitter defines 10 reference objects, which are a reference object 1 to a reference object 10. When expressing the relative position information of the target object, the transmitter may use one or more of foregoing 10 reference objects for an expression. For example, the transmitter uses the reference object 1 and the reference object 2 to perform a relative position expression on the target object. In this case, the second at least one reference object includes the reference object 1 to the reference object 10, that is, the reference object information indicates an identifier, in the geographic area, of each of the reference object 1 to the reference object 10, and indicates a position of each reference object. The first at least one reference object includes the reference object 1 and the reference object 2, that is, the reference object indication information indicates the reference object 1 and the reference object 2.

In a possible implementation, the second at least one reference object is the first at least one reference object. For example, it is assumed that the transmitter defines 10 reference objects, which are a reference object 1 to a reference object 10. When expressing the relative position information of the target object, the transmitter may use one or more of foregoing 10 reference obj ects for an expression. For example, the transmitter uses the reference object 1 and the reference object 2 to perform a relative position expression on the target object. In this case, the reference object information may indicate respective identifiers and respective positions, in the geographic area, of the reference object 1 and the reference object 2 (namely, reference objects actually used during the relative position expression of the target object). In this way, the V2X message can be prevented from carrying related information of a relatively large quantity of invalid reference objects, and air interface overheads of the V2X message can be reduced.

S302: The transmitter sends the V2X message to a receiver.

Correspondingly, the receiver receives the V2X message.

S303: The receiver determines target position information of the target object based on the reference object indication information, the position indication information, and the reference object information.

In a possible implementation, the receiver may determine a position of the first at least one reference object based on the reference object indication information and the reference object information, and determine the target position information of the target object based on the position of the first at least one reference object and the position indication information.

In this embodiment, when transferring the relative position information of the target object to the receiver by using the V2X message, the transmitter further carries the reference object information in the V2X message for sending, so that the receiver may accurately locate, based on the reference object information, a reference object used when the transmitter expresses the relative position information of the target object. In this way, the receiver locates the target object based on a position of the located reference object. This improves locating accuracy of the target object.

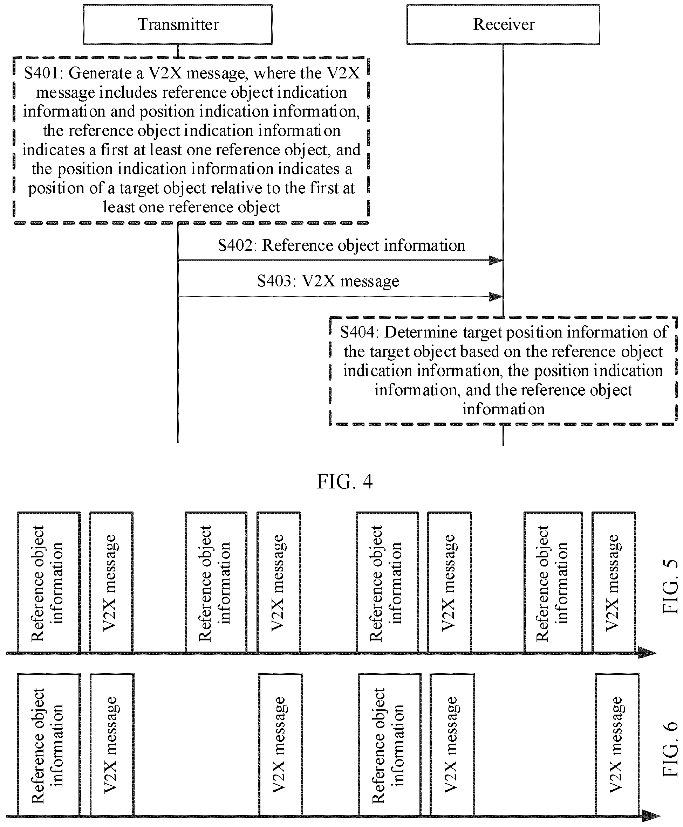

In the embodiment shown in FIG. 3, the reference object information may be carried in the V2X message for sending. This embodiment is applicable to a scenario in which a quantity of second at least one reference objects indicated in the reference object information is not large. When there is a large quantity of second at least one reference objects, to avoid high air interface overheads of the V2X message, the reference object information and the V2X message may be separately sent. The following provides description with reference to the embodiment shown in FIG. 4.

FIG. 4 is a schematic flowchart of still another communication method according to an embodiment of this application. As shown in FIG. 4, the method in this embodiment includes the following steps.

S401: A transmitter generates a V2X message, where the V2X message includes reference object indication information and position indication information, the reference object indication information indicates a first at least one reference object, and the position indication information indicates a position of a target object relative to the first at least one reference object.

S402: The transmitter sends reference object information to a receiver, where the reference object information indicates an identifier, in a geographic area, of each reference object in a second at least one reference object, and indicates a position of each reference object in the second at least one reference object, and the second at least one reference object includes the first at least one reference object.

Optionally, the second at least one reference object is the first at least one reference object. In other words, in the reference object information, only related information of a reference object that is actually used for a relative position expression of the target object is sent. This can prevent the reference object information from carrying much related information of an invalid reference object, and reduce air interface overheads of the reference object information.

S403: The transmitter sends the V2X message to the receiver.

Correspondingly, the receiver receives the reference object information and the V2X message.

It should be noted that a sending sequence of the reference object information and the V2X message is not limited in this embodiment. The reference object information may be first sent, and then the V2X message is sent, or the V2X message may be first sent, and then the reference object information is sent.

S404: The receiver determines target position information of the target object based on the reference object indication information, the position indication information, and the reference object information.

A difference between this embodiment and the embodiment shown in FIG. 3 lies in that the reference object information is not carried in the V2X message for sending, but is carried in the reference object information for sending, so that the reference object information and the V2X message are separately sent. This avoids excessively high air interface overheads occupied by the V2X message.

Implementations of other steps in the embodiment shown in FIG. 4 are similar to those in the embodiment shown in FIG. 3. Details are not described herein again.

Based on the embodiment shown in FIG. 4, in a possible implementation, both the V2X message and the reference object information may be periodically sent messages. The following describes several possible sending manners of the reference object information and the V2X message by using examples with reference to FIG. 5 to FIG. 7.

FIG. 5 is a schematic diagram of a sending manner of reference object information and a V2X message according to an embodiment of this application. As shown in FIG. 5, both the reference object information and the V2X message may be periodically sent messages, and a sending frequency of the reference object information may be the same as a sending frequency of the V2X message.

For example, it is assumed that a sending period of the V2X message is 1 second, each time a sending occasion of the V2X message arrives, the transmitter sequentially sends the reference object information and the V2X message, so that the reference object information and the V2X message are sent in a same period. It should be noted that, in FIG. 5, for example, the reference object information is sent before the V2X message. In actual application, the reference object information may alternatively be sent after the V2X message. This is not limited in this embodiment, provided that sending frequencies of the two are the same.

In the sending manner shown in FIG. 5, the reference object information and the V2X message are sent in a same period, and therefore, this implementation is simple.

FIG. 6 is a schematic diagram of another sending manner of reference object information and a V2X message according to an embodiment of this application. As shown in FIG. 6, both the reference object information and the V2X message may be periodically sent messages, and a sending frequency of the reference object information may be lower than a sending frequency of the V2X message. In other words, the reference object information is sent at a reduced frequency.

For example, it is assumed that a sending period of the V2X message is 1 second, a sending period of the reference object information may be 2 seconds. Refer to FIG. 6. The reference object information and the V2X message are sequentially sent on a first sending occasion of the V2X message. On a second sending occasion of the V2X message, only the V2X message needs to be sent, and the reference object information does not need to be sent. On a third sending occasion of the V2X message, the reference object information and the V2X message are sequentially sent. On a fourth sending occasion of the V2X message, only the V2X message needs to be sent, and the reference object information does not need to be sent. The foregoing process is repeated.

In the sending manner shown in FIG. 6, the reference object information is sent at a reduced frequency, so that air interface overheads can be further reduced.

It should be noted that the V2X message is a periodically sent message. The transmitter generates the V2X message based on the sending period corresponding to the V2X message, and sends the V2X message to the receiver. It should be understood that the V2X message sent in each period transfers position information of a target object in the current period. For example, the V2X message sent in an n^{th} period transfers position information of a target object at an n^{th} moment or in a (n+1)^{th} period, and the V2X message sent in the (n+1)^{th} period transfers position information of a target object at a (n+1)^{th} moment or in the (n+1)^{th} period. The target object in the V2X message sent in the n^{th} period may be the same as or different from the target object in the V2X message sent in the (n+1)^{th} period. When the target object in the V2X message sent in the n^{th} period is the same as the target object in the V2X message sent in the (n+1)^{th} period, position information of the two may be the same or different. Therefore, in embodiments of this application, the V2X message is a periodically non-repeated message.

In the embodiments shown in FIG. 5 and FIG. 6, the reference object information may be a periodically repeated message, that is, content of the reference object information sent in each period is repeated.

Based on the embodiment shown in FIG. 6, in a possible implementation, when a version of the reference object information of the transmitter is updated, the transmitter may immediately send updated reference object information. This can ensure that the receiver learns the updated reference object information in a timely manner, so that accuracy of a locating result of the target object by the receiver is ensured.

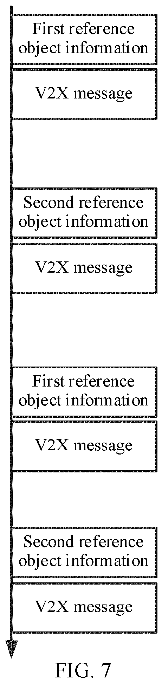

FIG. 7 is a schematic diagram of still another sending manner of reference object information and a V2X message according to an embodiment of this application. As shown in FIG. 7, the reference object information may be sent in packets, that is, related information of some reference objects may be sent in each piece of reference object information.

Specifically, the reference object information includes first reference object information and second reference object information, and the first reference object information and the second reference object information are sent in packets. The first reference object information includes the first reference object information, and the second reference object information includes the second reference object information. The first reference object information indicates an identifier, in the geographic area, of each reference object in a third at least one reference object, and indicates a position of each reference object in the third at least one reference object. The second reference object information indicates an identifier, in the geographic area, of each reference object in a fourth at least one reference object, and indicates a position of each reference object in the fourth at least one reference object. The second at least one reference object includes the third at least one reference object and the fourth at least one reference object.

For example, it is assumed that the transmitter defines 10 reference objects, which are a reference object 1 to a reference object 10. In this way, the reference object information indicates an identifier, in the geographic area, of each of the reference object 1 to the reference object 10, and indicates a position of each reference object. The transmitter may perform packet division processing on the reference object information. For example, the reference object information is divided into the first reference object information and the second reference object information by using an example in which the reference object information is divided into two packets. The first reference object information indicates an identifier, in the geographic area, of each of the reference object 1 to the reference object 5, and indicates a position of each reference object. The second reference object information indicates an identifier, in the geographic area, of each of the reference object 6 to the reference object 10, and indicates a position of each reference object. Further, the transmitter separately sends the first reference object information and the second reference object information. In this way, the reference object information is sent in packets.

It may be understood that a mode of sending in packets is applicable to a scenario with a large quantity of reference objects. Through the mode of sending in packets, air interface overheads of the reference object information can be reduced.

Refer to FIG. 7. When the transmitter sends the reference object information in packets, the transmitter may perform sending with reference to a sending period of the V2X message. For example, the reference object information is divided into two packets (that is, the reference object information is divided into the first reference object information and the second reference object information). The first reference object information and the V2X message are sequentially sent on a first sending occasion of the V2X message, and the second reference object information and the V2X message are sequentially sent on a second sending occasion of the V2X message. The first reference object information and the V2X message are sequentially sent on a third sending occasion of the V2X message, and the second reference object information and the V2X message are sequentially sent on a fourth sending occasion of the V2X message. The foregoing process is repeated.

In the sending manner shown in FIG. 7, the reference object information is sent at a reduced frequency. In addition, a size of each piece of reference object information is further reduced, and air interface overheads can be further reduced.

It should be noted that, in the foregoing example, description is provided by using an example in which the reference object information is divided into two packets. A quantity of packets is not limited in this embodiment, and the reference object information may be divided into more packets for sending.

Based on any one of the foregoing embodiments, the following describes a field structure of the V2X message by using an example with reference to several specific scenarios.

Scenario 1: A road side device sends an RSI message to a terminal device, and transfers position information of an event in the RSI message.

Specifically, the road side device senses an ambient environment, selects, when sensing the event, an appropriate reference object around the event based on the reference object information, calculates relative position information of the event relative to the selected reference object, and generates the RSI message based on an identifier of the selected reference object and the calculated relative position information.

Optionally, when a reference object is selected, if there are a plurality of reference objects around the event, a reference object with a higher priority may be selected, or a reference object with a higher position precision may be selected, or a reference object with higher confidence may be selected. In this way, accuracy of the calculated relative position information can be ensured.

Optionally, when sensing a plurality of events, the road side device selects an appropriate reference object for each event. Reference objects selected for different events may be the same or may be different.

Optionally, one or more reference objects may be selected for each event. When a plurality of reference objects are selected, the RSI message transfers relative position information of each reference object based on the event. In this way, the receiver may select one or more reference objects to perform parsing and locating according to a requirement of the receiver, so that processing flexibility of the receiver is improved.

The following describes a field structure of the RSI message by using an example. The original RSI message includes the following fields: a road side device identifier (RSUID), and an event list (RTEList). Each event in the event list (RTEList) may include the following fields: an event identifier (Rte ID), an event type (EventType-Ex), an event attribute (EventAttribute), an event source (EventSource-Ex), an event description (description), an event priority (Priority), event confidence (EventConfidence), event time details (RsiTimeDetails), and the like.

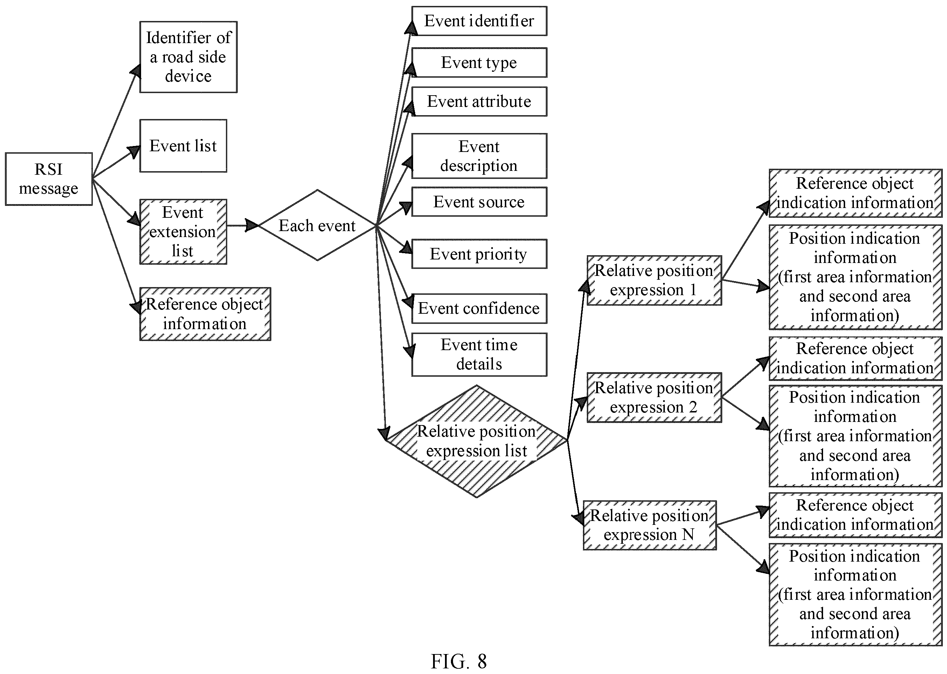

FIG. 8 is a schematic diagram of a field structure of an RSI message according to an embodiment of this application. As shown in FIG. 8, in this embodiment of this application, for ease of forward compatibility, fields in an event list (RTEList) of an original RSI message remain unchanged. An "event extension list (RTElist-Ex)" field is added to the original RSI message. The event extension list (RTElist-Ex) includes fields in the event list (RTEList), and the following "relative position expression list of an event" field is added to the event extension list (RTElist-Ex).

Still refer to FIG. 8. The relative position expression list of the event may include one or more relative position expressions. Each relative position expression includes reference object indication information and position indication information. For example, the reference object indication information may be an identifier, in a geographic area, of a reference object on which the relative position expression is based. The position indication information may include first area information and second area information. The first area information indicates a first geographic area in which the event occurs, and the second area information indicates a second geographic area affected by the event. The first area information is a result of performing a relative position expression on the first geographic area based on the reference object, and the second area information is a result of performing a relative position expression on the second geographic area based on the reference object.

Optionally, each of the first geographic area and the second geographic area may be one of a rectangular area, a circular area, a polygonal area, and a lane/road length area.

In this embodiment, because occurrence of an event and impact of the event are both within a specific range, a position expression of the event is more accurate by describing a position of the event based on the first area information and the second area information than describing the position of the event based on a coordinate point.

Optionally, still refer to FIG. 8. In a case in which the reference object information and the RSI message are sent together, the RSI message may further include the reference object information.

Scenario 2: A road side device sends an RSM message to a terminal device, and transfers position information of a participant in the RSM message.

A process in which the road side device generates the RSM message is similar to a process in which the road side device generates the RSI message. Details are not described herein again. The following describes a field structure of the RSI message by using an example. The original RSM message includes the following fields: a road side device identifier (RSUID), and a participant list (PaticipantList). Each participant in the participant list (PaticipantList) may include the following fields: a participant identifier (Ptc ID), a participant type (ParticipantType), a participant speed (Speed), a participant source type (Source Type), participant position confidence (PositionConfidenceSet), a participant transmission state (TransmissionState), a participant size (Vehiclesize), and the like.

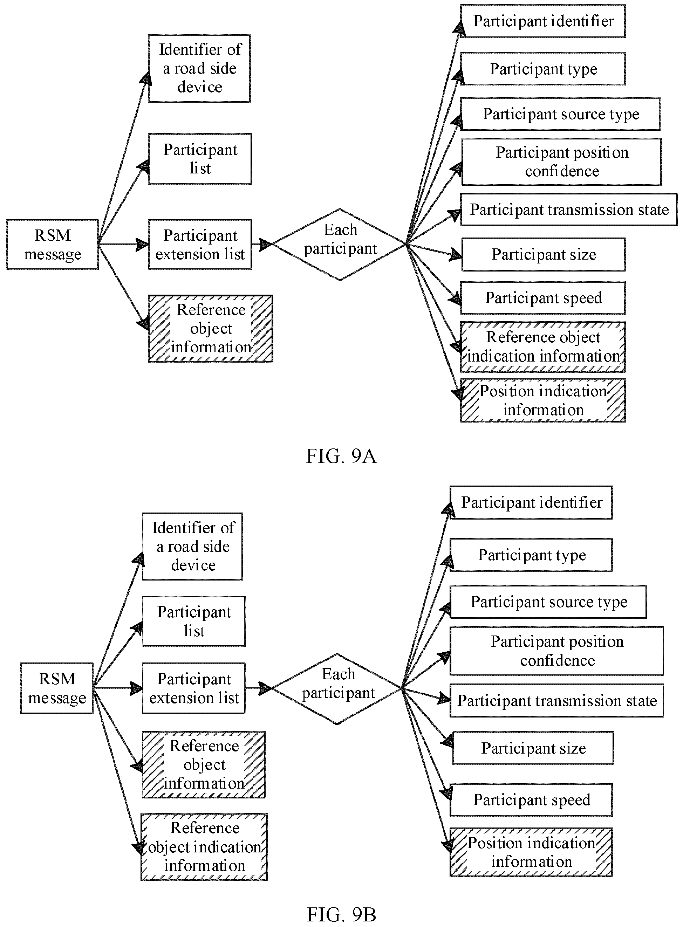

FIG. 9A is a schematic diagram of a field structure of an RSM message according to an embodiment of this application. As shown in FIG. 9A, for ease of forward compatibility, fields in a participant list (PaticipantList) of an original RSM message remain unchanged. A "participant extension list (PaticipantList-Ex)" field is added to the original RSM message. The "participant extension list (PaticipantList-Ex)" includes fields in the participant list (PaticipantList), and the following fields "reference object indication information of a participant" and "position indication information of the participant" are added to the "participant extension list (PaticipantList-Ex)".

In the RSM message shown in FIG. 9A, each participant corresponds to reference object indication information, that is, different participants perform relative position expressions based on different reference objects.

FIG. 9B is a schematic diagram of a field structure of another RSM message according to an embodiment of this application. A difference between the RSM message shown in FIG. 9B and the RSM message shown in FIG. 9A lies in that in the RSM message shown in FIG. 9B, all participants share one reference object, that is, all participants in the RSM message perform relative position expressions based on a same reference object.

Optionally, still refer to FIG. 9A and FIG. 9B. In a case in which the reference object information and the RSM message are sent together, the RSM message may further include the reference object information.

Scenario 3: A road side device sends a SPAT message to a terminal device, and transfers position information of a traffic signal light in the SPAT message.

A process in which the road side device generates the SPAT message is similar to a process in which the road side device generates the RSI message. Details are not described herein again. The following describes a field structure of the SPAT message by using an example. An original SPAT message includes an intersection list (Intersections). For each intersection in the intersection list, the following fields are included: an intersection identifier (intersectionId), an intersection status (status), and phase information (phases). The phase information may be a list, and each phase in the list corresponds to one signal light or a group of signal lights. A field of the signal light (Seq. of phase) includes a signal light identifier, a signal light state (phaseStates), and the like. The signal light state (phaseStates) may include the following fields: lighting (lighting), and a timing (timing). The timing manner includes the following fields: a counter (counting), and a time difference (utcTiming).

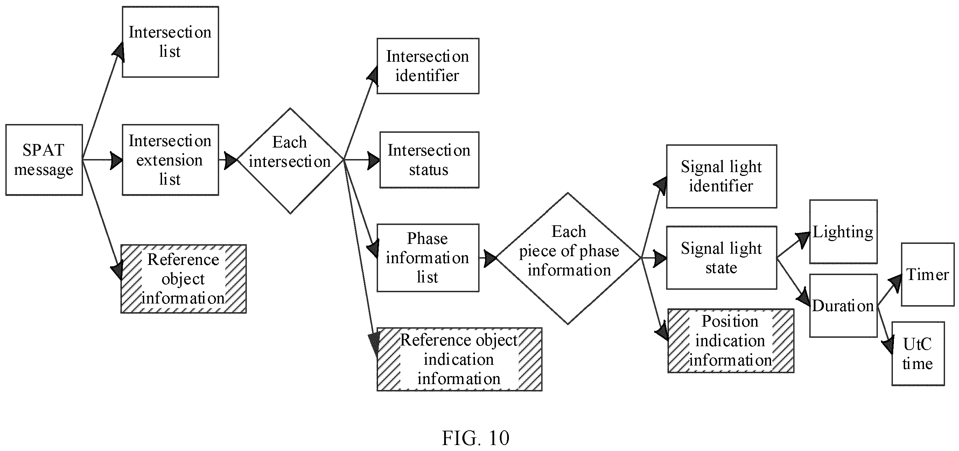

FIG. 10 is a schematic diagram of a field structure of a SPAT message according to an embodiment of this application. As shown in FIG. 10, for the convenience of forward compatibility, fields in an intersection list (Intersections) in an original SPAT message remain unchanged. An "intersection extension list (Intersections-Ex)" field is added to the original SPAT message. The "intersection extension list (Intersections-Ex)" includes fields in the intersection list (Intersections), and the following field "reference object indication information" is added to the "intersection extension list (Intersections-Ex)". In this way, all signal lights at each intersection share one reference object.

Further, still refer to FIG. 10. In each piece of phase information (phases) in the "intersection extension list (Intersections-Ex)", the following field "position indication information (PositionOffSetLLV)" is added based on an original field.

Optionally, still refer to FIG. 10. In a case in which the reference object information and the SPAT message are sent together, the SPAT message may further include the reference object information.

In the foregoing three example scenarios, field structures of the RSI message, the RSM message, and the SPAT message are described by using examples, to support a relative position expression based on the reference object. It should be noted that the fields shown in FIG. 8 to FIG. 10 are merely examples. In actual application, more other fields may be included. This is not limited in embodiments of this application. In FIG. 8 to FIG. 10, a field marked with a shadow may be a field newly added to an original V2X message structure.

As described in the foregoing embodiments, the transmitter may transfer reference object information to the receiver. The following describes a process of generating reference object information by the transmitter and detailed content of the reference object information with reference to specific embodiments. In the following examples, an example in which the reference object is a reference point is used for illustration. When the reference object is a reference line, a principle and an implementation process of the reference line are similar to those of the reference point, and examples are not described in embodiments of this application again.

It should be noted that when a reference point is selected, the reference point may be extracted from a map, or may be extracted from raw data collected for map drawing. This is not specifically limited in embodiments of this application.

In embodiments of this application, when a reference point is selected, the reference point may be defined based on one or more of the following selection principles:
(1) Generality principle: The reference point is a point that is generally included in a cartographic specification of each map vendor or data collected by the map vendor.
(2) Stability principle: The reference point is a point that changes slightly on a map.
(3) Deterministic principle: The reference point is a point that is defined clearly without vague semantic understanding.
(4) Precision principle: The reference point is a point with high position precision, and an error caused by cartographic difference between different map vendors is small.

For example, a crossover point between a lane line physical marking and a stop line physical marking meets the foregoing generality principle, stability principle, deterministic principle, and precision rule, and the crossover point may be used as a reference point. Similarly, an end point, a crossover point, a vertex, a breakpoint, or the like of a lane line or a stop line may be selected as a reference point. Alternatively, a ground projection point corresponding to a geometric center point or a geometric center point of a traffic sign, a traffic marking, a traffic signal light box, a building, or a vegetation external frame may be selected as a reference point.

With reference to Table 1, the following uses several possible examples to describe a definition of the reference point and related information of the reference point. In embodiments of this application, the definition of the reference point is mainly used to specify how to select the reference point, and is used to distinguish a type of the reference point.

**Table 1**

| Reference point definition | Additional information and rule description | Type number | Priority |
|---|---|---|---|
| Left and right end points of a stop line physical marking of a through lane | Distinguish the left and right end points based on a stop line: Distinguish the left and right end points based on a driving direction on a road on which the stop line is located, where the left end point is located on a left side of the driving direction, and the right end point is located on a right side of the driving direction | EP01 and EP02 | First priority |
| Left and right end points of a stop line physical marking of a left-turn waiting zone | | EP03 and EP04 | First priority |
| Crossover point between a stop line physical marking of a through lane and an N^{th} lane line physical marking of the through lane | Additional number information of an N^{th} lane line | CP01 | First priority |
| | Rule: Number lane lines from left to right in a driving direction on a road, starting from 1. A lane line with a minimum number value is a left edge line of the road, and a lane line with a maximum number value is a right edge line of the road | CP02 | First priority |
| Crossover point between a stop line physical marking of a left-turn waiting zone and an N^{th} lane line physical marking of the left-turn waiting zone | | | |
| Crossover point of physical markings of two road side lines | | CP03 | First priority |
| Crossover point of virtual extension lines of two road side lines | | CP04 | Third priority |
| Crossover point of two lane center lines | | CP05 | Third priority |
| Vertex of an external polygon of a crosswalk | | PV01 | Second priority |
| Lane line type change point | Additional line type information, indicating a change from line type A to line type B | LCP01 | Second priority |
| | Rule: Define line types, for example, from a single solid line A to a single dotted line B | | |
| Lane line color change point | Additional color type information, indicating a change from color A to color B | LCP02 | Second priority |
| | Rule: Define line colors, for example, from a white line A to a yellow line B | | |
| Lane line cross-attribute change point | Additional cross-attribute information, indicating a change from an attribute A to an attribute B | LCP03 | Second priority |
| | Rule: Define attributes, for example, from the attribute A to the attribute B | | |
| Ground projection point corresponding to a geometric center of an external frame of a traffic sign | Additional type number of the traffic sign, for example, a number of a speed limit sign | TS01 | Second priority |
| | Rule: The external frame is limited to a rectangle, circle, or triangle | | |
| Geometric center point of an external frame of a traffic marking | Additional marking type number, for example, a number of a left-turn arrow | TM01 | Second priority |
| | Rule: The external frame is limited to a rectangle, circle, or triangle | | |
| Ground projection point corresponding to a geometric center of an external frame of a traffic signal light frame | Rule: The external frame is limited to a rectangle | TL01 | Second priority |

Example 1: Left and right end points of a stop line physical marking of a through lane

Example 2: Left and right end points of a stop line physical marking of a left-turn waiting zone

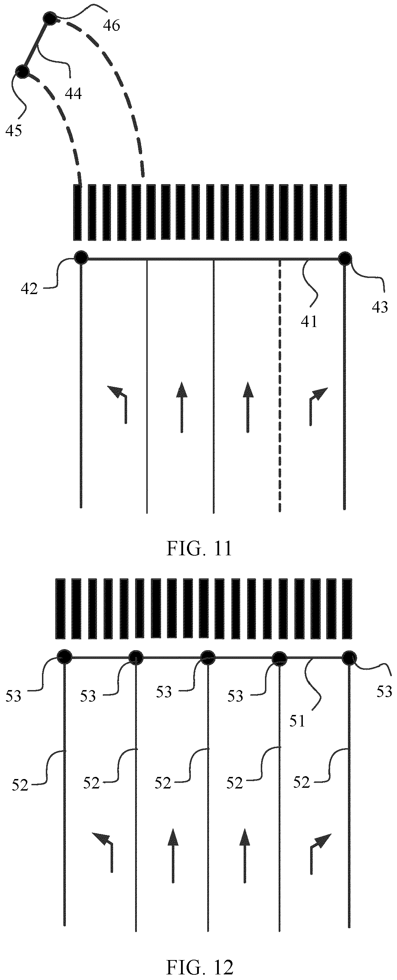

The types of the reference points defined in the foregoing two examples may be referred to as an end point (end point, EP) type. FIG. 11 is a schematic diagram of an EP-type reference point according to an embodiment of this application. As shown in FIG. 11, a left end point 42 and a right end point 43 of a stop line physical marking 41 of a through lane are selected as reference points, and a left end point 45 and a right end point 46 of a stop line physical marking 44 of a left-turn waiting zone are selected as reference points.

It should be noted that, in the foregoing two examples, the left and right end points of the stop line physical marking are selected as reference points. Because the stop line physical marking generally has a specific width, in actual application, left and right end points of a center line of the stop line physical marking may be selected as reference points. Alternatively, left and right end points of an inner side line (a side line close to a side of a lane) of the stop line physical marking may be selected as reference points. Alternatively, left and right end points of an outer side line (a side line away from a side of a lane) of the stop line physical marking may be selected as reference points.

Example 3: Crossover point between a stop line physical marking of a through lane and an N^{th} lane line physical marking of the through lane

Example 4: Crossover point between a stop line physical marking of a left-turn waiting zone and an N^{th} lane line physical marking of the left-turn waiting zone

Example 5: Crossover point of physical markings of two road side lines

Example 6: Crossover point of virtual extension lines of two road side lines

Example 7: Crossover point of lane center lines

The types of the reference points defined in Example 3 to Example 7 may be referred to as a crossover point (crossover point, CP) type. The following provides an example with reference to FIG. 12 to FIG. 14.

FIG. 12 is a schematic diagram of a CP-type reference point according to an embodiment of this application. FIG. 12 is a schematic diagram of the foregoing Example 3. As shown in FIG. 12, a crossover point 53 between a stop line physical marking 51 of the through lane and each lane line physical marking 52 is selected as a reference point.

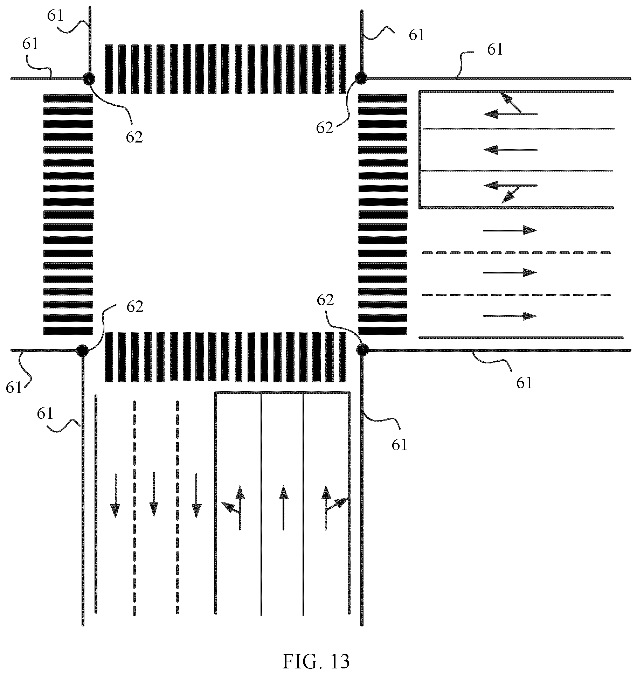

FIG. 13 is a schematic diagram of another CP-type reference point according to an embodiment of this application. FIG. 13 is a schematic diagram of the foregoing Example 5. As shown in FIG. 13, a crossover point 62 of physical markings 61 of the two road side lines is selected as a reference point. In some scenarios, there may be no actual crossover point between the two road side lines. For example, a junction of the two road side lines is an arc. In this case, a crossover point of virtual extension lines of the two road side lines may be selected as a reference point (that is, Example 6). This case is similar to FIG. 13, and is not described again with reference to the accompanying drawings.

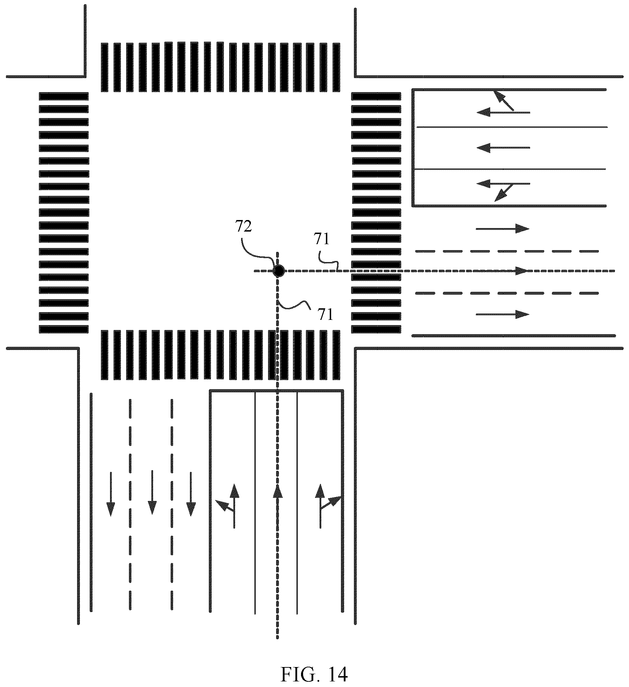

FIG. 14 is a schematic diagram of still another CP-type reference point according to an embodiment of this application. FIG. 14 is a schematic diagram of the foregoing Example 7. As shown in FIG. 14, a crossover point 72 between two lane center lines 71 is selected as a reference point. It should be understood that, in FIG. 14, each road includes 6 lanes, and two roads include 12 lanes in total. In FIG. 14, only a crossover point of center lines of two lanes is used as an example for illustration. In actual application, a crossover point of center lines of any two lanes may be selected as a reference point.

Example 8: Vertex of an external polygon of a crosswalk

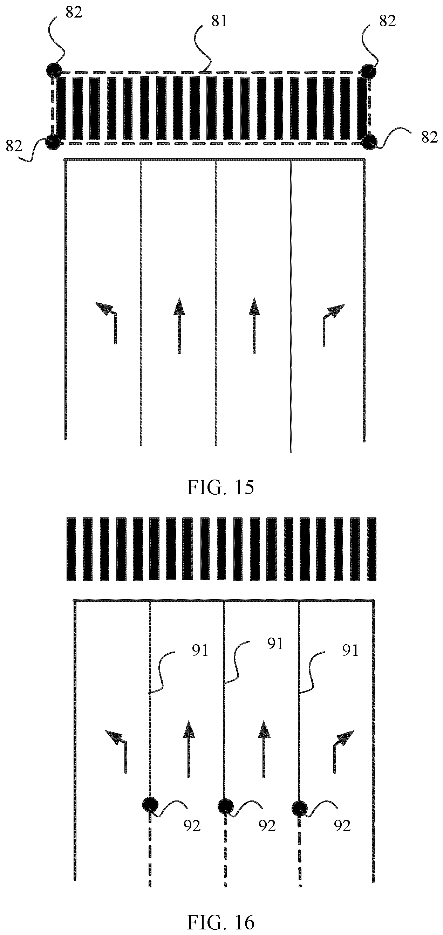

The type of the reference point defined in the foregoing Example 8 may be referred to as a polygon vertex (polygon vertex, PV) type. FIG. 15 is a schematic diagram of a PV-type reference point according to an embodiment of this application. As shown in FIG. 15, four vertices 82 of an external rectangular frame 81 of the crosswalk are selected as reference points.

Example 9: Lane line type change point, where for example, a lane line is changed from a solid line to a dashed line, or from a dashed line to a solid line.

Example 10: Lane line color change point, where for example, a lane line is changed from a yellow line to a white line, from a white line to a yellow line, or the like.

Example 11: Lane line cross-attribute change point, where a cross-attribute refers to an attribute other than a line type and line color of a lane line.

The types of the reference points defined in Example 9 to Example 11 may be referred to as a line change point (line change point, LCP) type. FIG. 16 is a schematic diagram of an LCP-type reference point according to an embodiment of this application. As shown in FIG. 16, a change point 92 at which a lane line 91 is changed from a dashed line to a solid line is selected as a reference point. It should be noted that the foregoing Example 9 (line type change) is used as an example for illustration in FIG. 16. Example 10 and Example 11 are similar cases, and are not described again by using examples with reference to the accompanying drawings.

Example 12: Geometric center point of an external frame of a traffic marking

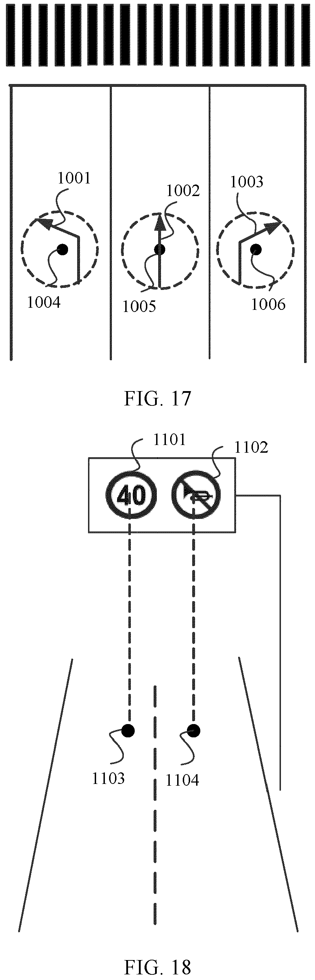

The type of the reference point defined in the foregoing Example 12 may be referred to as a traffic marking (traffic marking, TM) type. FIG. 17 is a schematic diagram of a TM-type reference point according to an embodiment of this application. As shown in FIG. 17, a geometric center point 1004 of a circular external frame of a left-turn arrow 1001 is selected as a reference point, a geometric center point 1005 of a circular external frame of a straight arrow 10021 is selected as a reference point, and a geometric center point 1006 of a circular external frame of a right-turn arrow 1003 is selected as a reference point. It should be noted that, in FIG. 17, a circular external frame is used as an example for illustration, and a rectangular external frame, a triangular external frame, or the like may alternatively be used.

Example 13: Ground projection point corresponding to a geometric center point of an external frame of a traffic sign

The type of the reference point defined in the foregoing Example 13 may be referred to as a traffic sign (traffic sign, TS) type. FIG. 18 is a schematic diagram of a TS-type reference point according to an embodiment of this application. As shown in FIG. 18, a ground projection point 1103 corresponding to a geometric center point of an external frame of a speed limit sign 1101 is selected as a reference point, and a ground projection point 1104 corresponding to a geometric center point of an external frame of a no-horn sign 1102 is selected as a reference point. It should be noted that the external frame may be a circular external frame, a rectangular external frame, a triangular external frame, or the like.

Example 14: Ground projection point corresponding to a geometric center of an external frame of a traffic signal light frame

The type of the reference point defined in the foregoing Example 14 may be referred to as a traffic light (traffic light, TL) type. It should be understood that how to select a reference point in Example 14 is similar to that in Example 13, and an example is not described herein again with reference to the accompanying drawings. In an actual environment, the traffic signal light frame is generally a rectangular frame. Therefore, the external frame in Example 14 may be a rectangular external frame.

It should be noted that the reference points shown in Example 1 to Example 14 and FIG. 11 to FIG. 18 are merely some possible examples. Embodiments of this application are not limited thereto.

After one or more reference objects are selected, reference object information is generated based on related information of each reference object. In addition to indicating a first identifier of each reference object in a geographic area and a position of each reference object, the reference object information may further indicate at least one of the following content: current version information, previous version information, an update status of each reference object, a type of each reference object, a priority of each reference object, position precision of each reference object, confidence of each reference object, a map element associated with each reference object, and an identifier of the geographic area. In this way, the reference object information describes each reference object more abundantly, so that the reference object can be located more accurately.

The following separately describes each of the foregoing items.

In a possible implementation, the reference object information may further indicate a type of each reference point.

In embodiments of this application, for ease of use, a type of a reference point may be encoded. It should be noted that an encoding form of the type of the reference point is not limited in embodiments of this application. For example, an integer field may be used for encoding, or a character string may be used for encoding.

The following uses an example to describe a coding manner of the type of the reference point.

For example, the type of each reference point may include a first type number. The first type number indicates that the type of the reference point is any one of the following: an EP type, a CP type, a PV type, an LCP type, a TM type, a TS type, and a TL type. It may be understood that the first type number is used to distinguish how to select a reference point.

Optionally, the type of each reference point may alternatively include a second type number. The second type number is related to a type of a map element on which how to select the reference point is based.

For example, the foregoing Example 1 and Example 2 are used as an example. Refer to Table 1. Type information of a reference point defined for "a left end point of a stop line physical marking of a through lane" may be encoded as EP01, and type information of a reference point defined for "a right endpoint of a stop line physical marking of a through lane" may be encoded as EP02. Type information of a reference point defined for "a left end point of a stop line physical marking of a left-turn waiting zone" may be encoded as EP03, and type information of a reference point defined for "a right end point of a stop line physical marking of a left-turn waiting zone" may be encoded as EP04. During encoding, "EP" is a first type code, and "01", "02", "03", and "04" are second type numbers.

It should be noted that, for the reference points defined in Example 3 to Example 14, encoding manners of the type information of the reference points are similar, and examples are not described one by one in this embodiment. For some example type encoding results, refer to Table 1.

In a possible implementation, the reference object information may further indicate additional information of each reference point. The additional information is used to further describe reference points in detail and a clearly set description rule, so as to accurately distinguish the reference points. The additional information of the reference point may include the following two pieces of content:
(a) Agreed rule, where for example, lane lines are sequentially numbered from left to right in a driving direction on a road, starting from 1. A lane line with a minimum number value is a left edge line of the road, and a lane line with a maximum number value is a right edge line of the road.
(b) Additional description, where the reference point is a crossover point between a third lane line and a stop line.

It should be noted that, a form of the additional description is not limited in this embodiment, and a program-oriented expression manner may be defined, or a text description manner may be used.

For example, for additional information corresponding to the reference points defined in the foregoing examples, refer to Table 1.

In a possible implementation, the additional information may be further encoded into the type of the reference point, so that the additional information may be distinguished in detail only based on the type of the reference point. For example, CP01 in the foregoing table may be specifically numbered CP01-02, indicating a crossover point between a stop line of a through lane and a second lane line of a road. For another example, LCP01 in the foregoing table may be specifically numbered LCP01-01-02, indicating a change of a lane line type from a single solid line (01) to a single dashed line (02).

It can be learned that in this embodiment of this application, a type (for example, an EP type, a CP type, a PV type, an LCP type, a TM type, a TS type, or a TL type) of a reference point determined based on how to select the reference point may be used as a first-level type of the reference point. The additional information may be used as a second-level type of the reference point, and is used to subdivide the reference point type.

It should be noted that in this embodiment of this application, an expression form of the additional information and an encoding form of the type information are merely an example, and are not limited in this embodiment. In actual application, the additional information and the type information may be directly encoded as a whole, or hierarchical encoding may be performed on the additional information and the type information, for example, first-level type encoding and second-level type encoding.

In a possible implementation, the reference object information may further indicate a priority of each reference point. The priority may indicate a degree of compliance between the reference point and a preset reference point selection principle, and the preset reference point selection principle includes one or more of the following: a generality principle, a stability principle, a deterministic principle, and a precision principle. For example, a higher degree of compliance between a reference point and the preset reference point selection rule indicates a higher priority of the reference point, and a lower degree of compliance between a reference point and the preset reference point selection rule indicates a lower priority of the reference point.

For example, for the priorities of the reference points defined in the foregoing examples, refer to Table 1. The first priority is higher than the second priority, and the second priority is higher than the third priority.

A priority is set for each reference point. In this way, when a relative position expression is performed on a target object, if there are a plurality of reference points around the target object, a reference point with a higher priority may be selected for the relative position expression. This improves accuracy of expressed position information.

In a possible implementation, the reference object information may further indicate position precision of each reference point. Position precision of a reference point may indicate precision of a first position of the reference point. For example, position precision of each reference point may be determined by performing evaluation based on a position error of the reference point. Higher position precision of a reference point indicates a smaller position error of the reference point. When the reference point is used for the relative position expression of the target object, precision of a relative position expression result of the target object is higher.

Position precision is set for each reference point. In this way, when the relative position expression is performed on the target object, if there are a plurality of reference points around the target object, a reference point with higher position precision may be selected for the relative position expression. This improves accuracy of expressed position information.

In a possible implementation, the reference object information may further indicate confidence of each reference point. Confidence of a reference point indicates a trust degree of a first position of the reference point. Higher confidence of a reference point indicates a higher trust degree of a first position of the reference point. When the reference point is used for the relative position expression of the target object, confidence of a relative position expression result of the target object is higher.

Confidence is set for each reference point. In this way, when the relative position expression is performed on the target object, if there are a plurality of reference points around the target object, a reference point with higher confidence may be selected for the relative position expression. This improves accuracy of expressed position information.

In a possible implementation, the reference object information may further indicate a map element of each reference point. A map element associated with a reference point may be a map element on which how to select the reference point is based. For example, it is assumed that a reference point is a point at which a lane line is changed from a solid line to a dashed line, a map element associated with the reference point may be the lane line. It is assumed that a reference point is a left end point of a physical marking of a through lane stop line, a map element associated with the reference point may be the through lane stop line. It is assumed that a reference point is a crossover point between a through lane stop line and a lane line, map elements associated with the reference point may be the through lane stop line and the lane line.

A map element is associated with each reference point, so that an accurate position of the reference point may be quickly located based on an identifier of the map element associated with the reference point and a type of the reference point. This improves locating efficiency of the reference point.

In a possible implementation, the reference object information may further indicate an identifier of a geographic area in which each reference point is located. For example, the geographic area may be a map tile. For example, the identifier of the geographic area in which each reference point is located may be a number of a map tile in which the reference point is located. By indicating the identifier of the geographic area in which each reference point is located, locating efficiency and locating accuracy of the reference point may be ensured.

Optionally, for each geographic area, a reference point index table may be further established. The index table includes identifiers of all reference points in the geographic area and related information (for example, a first position, a type, a priority, position precision, confidence, and an associated map element) of each reference point. In this way, related information of a reference point related to an index may be quickly searched for based on the index table. This improves efficiency of using the reference object information.

In a possible implementation, the reference object information may further indicate current version information and previous version information. The current version information indicates a current version of the reference object information, and the previous version information indicates a previous version of the reference object information. In an example, a version number may be set for the reference object information. For example, a version of reference object information generated for a first time may be set to V1. A version of reference object information generated for a second time may be set to V2, or after the reference object information generated for the first time is updated, a version of updated reference object information may be set to V2, and so on. In another example, generation time or update time of the reference object information may be used as version information.

In a possible implementation, the reference object information may further indicate an update status of each reference point. An update status of a reference point indicates a status change condition of the reference point relative to a previous version. For example, an update status of a reference point may be one of the following: added, unchanged, updated, or deleted.

An update status is set for each reference point, so that after receiving the reference object information, a receiver may update, based on the update status of each reference point, a reference point whose status changes accordingly. This reduces a calculation amount and a processing delay of the receiver.

In an example, an identifier of a reference point in reference object information of each version may be consistent with that of a previous version. Table 2 provides a possible example. As shown in Table 2, a reference point 1 to a reference point 4 are added to reference object information of a V1 version. In reference object information of a V2 version, the reference point 2 is updated, the reference point 3 is deleted, and a reference point 5 is added. When receiving the reference object information of the V2 version, the receiver only needs to perform update, deletion, and addition operations on the reference point 2, the reference point 3, and the reference point 5 respectively, and does not need to recalculate the reference point 1 and the reference point 4.

Further, as shown in Table 2, it is assumed that in reference object information of a V3 version, the reference point 4 is updated, and the reference point 1, the reference point 2, and the reference point 5 remain unchanged. When receiving the reference object information of the V3 version, the receiver only needs to update the reference point 4, and does not need to recalculate the reference point 1, the reference point 2, and the reference point 5.

**Table 2**

| Reference point number | V1 version | V2 version | V3 version | ... |
|---|---|---|---|---|
| 1 | Added | Remain unchanged | Remain unchanged | |
| 2 | Added | Updated | Remain unchanged | |
| 3 | Added | Deleted | - | |
| 4 | Added | Remain unchanged | Updated | |
| 5 | | Added | Remain unchanged | |

In another example, an identifier of a reference point in reference object information of each version may be different from that of a previous version. In this case, the reference object information needs to indicate a correspondence between each reference point in the current version and each reference point in the previous version. For example, Table 3 provides another possible example. As shown in Table 3, it is assumed that, in reference object information of the current version received by the receiver, a correspondence between a reference point number of the current version and a reference point number of the previous version is: a reference point 1 of the current version corresponds to a reference point 1 of the previous version, and an update status of the reference point 1 of the current version is being unchanged; a reference point 2 of the current version corresponds to a reference point 3 of the previous version, and an update status of the reference point 2 of the current version is being unchanged; a reference point 3 of the current version corresponds to a reference point 4 of the previous version, and an update status of the reference point 3 of the current version is being updated; a reference point 4 of the current version corresponds to a reference point 2 of the previous version, and an update status of the reference point 4 of the current version is being updated; and a reference point 5 of the current version does not correspond to a reference point in the previous version, and an update status of the reference point 5 of the current version is being added.

After receiving the reference object information of the current version, the receiver does not need to update the reference point 1, only needs to adjust a number of the reference point 2, needs to update the reference point 3 based on the reference point 4 of the previous version, needs to update the reference point 4 based on the reference point 2 of the previous version, and performs addition processing on the reference point 5.

**Table 3**

| Reference point number in a current version | Reference point number in a previous version | Status relative to the previous version |
|---|---|---|
| 1 | 1 | Remain unchanged |
| 2 | 3 | Remain unchanged |
| 3 | 4 | Updated |
| 4 | 2 | Updated |
| 5 | - | Added |

In a possible implementation, after a plurality of reference objects are selected from a map, a reference object with a higher priority, higher position precision, or higher confidence may be selected from the plurality of reference objects as a general reference object. For the general reference object, a position may be expressed by using absolute coordinates, and for a common reference object (namely, a reference object other than the general reference object), a position may be expressed by using relative coordinates of the common reference object relative to the general reference object. It may be understood that the general reference object is used to provide a position reference for the common reference object. After receiving the reference object information, the receiver may determine the position of the common reference object based on the position of the common reference object. Further, position information of the target object is determined based on the position of the common reference object.

When there are a plurality of reference objects indicated by the reference object information, for the plurality of reference objects, there are a plurality of organization manners in the reference object information. The following provides several possible examples.

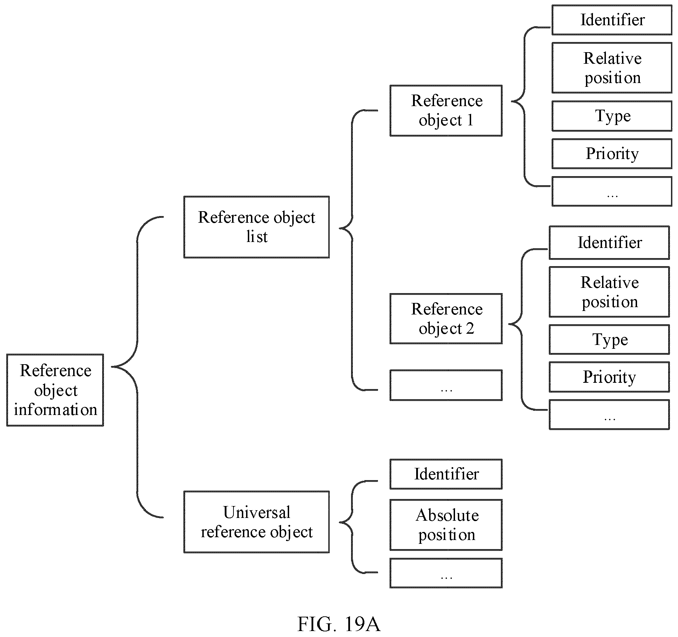

For example, FIG. 19A is a schematic diagram of an organization manner of reference object information according to an embodiment of this application. As shown in FIG. 19A, a general reference object may be determined from a plurality of reference objects, and a relative position expression is performed for a position of each reference object indicated by the reference object information based on the general reference object. In this case, in a data structure of the reference object information, the reference objects may be uniformly organized without being grouped.

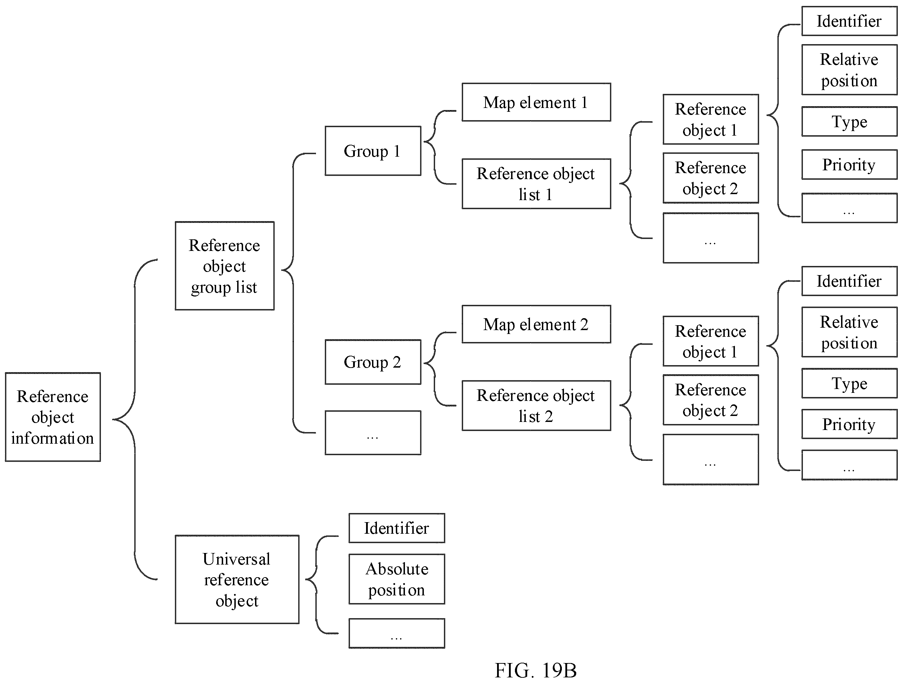

For example, FIG. 19B is a schematic diagram of another organization manner of reference object information according to an embodiment of this application. As shown in FIG. 19B, a general reference object may be determined from a plurality of reference objects, and a position of each reference object indicated by the reference object information is expressed based on the general reference object. In addition, group management is performed on the reference objects. For example, a plurality of common reference points associated with a same map element may be classified into one group. To be specific, a plurality of reference objects selected based on a same map element are classified into one group.

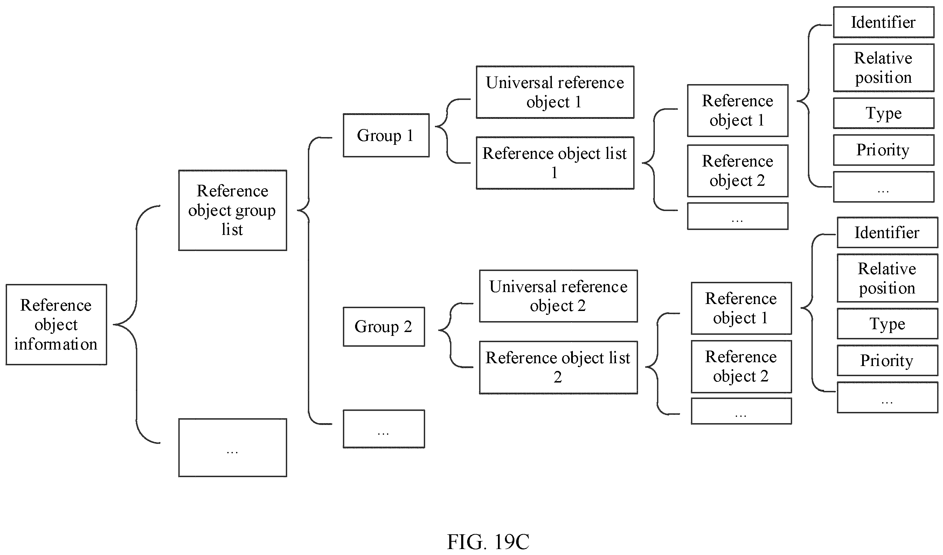

For example, FIG. 19C is a schematic diagram of still another organization manner of reference object information according to an embodiment of this application. As shown in FIG. 19C, group management is performed on reference objects indicated by the reference object information. For example, reference objects may be grouped based on a road network structure. For example, reference objects in a same road are classified into one group. Alternatively, reference objects in a same lane are classified into one group. Alternatively, reference objects in a same intersection are classified into one group. Further, a general reference object is determined in each group. In this way, a position expression is performed for a position of each reference object in the group based on the general reference object in the group.

It may be understood that, by performing group management on reference objects, a position expression may be performed, based on different general reference objects, for reference objects in different road network structures. This can improve locating accuracy, and further can increase a locating speed by implementing a diversity gain by using a plurality of general reference objects.

It may be learned from the foregoing manner of selecting a reference point that, in this embodiment of this application, the reference point is selected based on a map element. The map element based on which the reference point is selected is a physical element (like a lane line, a stop line, a traffic marking, a traffic sign, or a traffic signal light frame) that actually exists on a road, or a virtual element (like a lane center line or a road side line extension line) that may be accurately located based on a physical element that actually exists on a road. Therefore, reference points selected by different map vendors by using the solution in embodiments of this application are universal, and further, reference object information generated by using the universal reference points is universal. In this way, when a relative position expression is performed by using the reference object information, universality of expressed position information is ensured, and therefore, the reference object information may be applied to a scenario in which different electronic devices need to transfer position information.

In embodiments of this application, the reference object information may be used as a layer of a map. For ease of description, a layer corresponding to the reference object information may be referred to as a reference object layer.

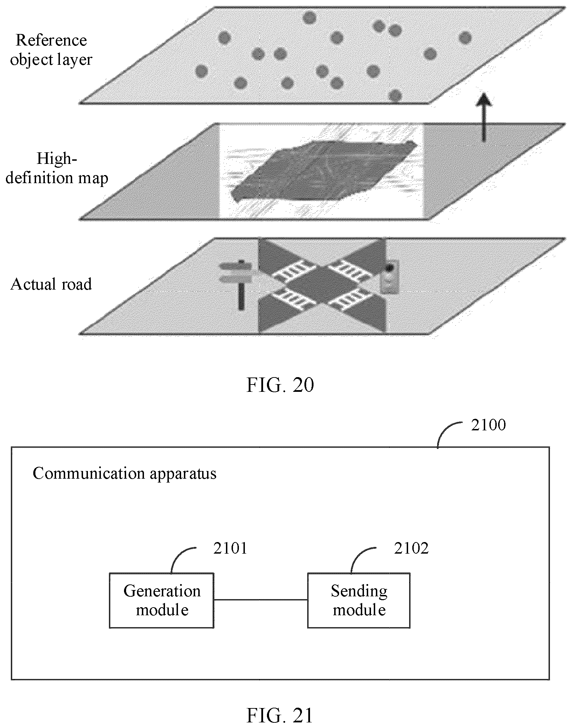

FIG. 20 is a schematic diagram of a reference object layer according to an embodiment of this application. As shown in FIG. 20, in a map construction process, a high-definition map may be constructed based on road elements in an actual road. In this embodiment of this application, a plurality of reference objects may be selected from the high-definition map, and reference object information (namely, the reference object layer in FIG. 20) is generated based on related information of the reference objects. In FIG. 20, an example in which the reference object is a reference point is used, and each point in the reference object layer represents one reference point.

By using the reference object information as a layer in the map, it is convenient to manage and associate the reference objects in the map.

It should be noted that the reference object information (the reference object layer) may be generated in a high-definition map construction process, or may be generated in an actual application scenario after the high-definition map is constructed. This is not limited in embodiments of this application.

FIG. 21 is a schematic diagram of a structure of a communication apparatus according to an embodiment of this application. The communication apparatus provided in this embodiment may be a cloud device, a road side device, or a terminal device. The cloud device may be, for example, a map server, or a software module, a hardware module, or a chip in the map server. The road side device may be, for example, a road side unit, or a software module, a hardware module, or a chip in the road side unit. The terminal device is, for example, a vehicle, or a software module, a hardware module, or a chip in the vehicle.

As shown in FIG. 21, a communication apparatus 2100 provided in this embodiment includes a generation module 2101 and a sending module 2102. The generation module 2101 is configured to generate a V2X message, where the V2X message includes reference object indication information and position indication information. The reference object indication information indicates a first at least one reference object, and the position indication information indicates a position of a target object relative to the first at least one reference object. The sending module 2102 is configured to send the V2X message.

The reference object indication information includes first reference object indication information and second reference object indication information. The first reference object indication information indicates a first reference object, and the second reference object indication information indicates a second reference object. The position indication information includes first position information and second position information. The first position information indicates a position of the target object relative to the first reference object, and the second position information indicates a position of the target object relative to the second reference object.

In a possible implementation, the target object is an event. The position indication information includes first area information and second area information. The first area information indicates a first geographic area in which the event occurs, and the second area information indicates a second geographic area affected by the event.

In a possible implementation, the V2X message further includes reference object information. The reference object information indicates an identifier, in a geographic area, of each reference object in a second at least one reference object, and indicates a position of each reference object in the second at least one reference object. The second at least one reference object includes the first at least one reference object.

In a possible implementation, the sending module 2102 is further configured to: send reference object information. The reference object information includes reference object information. The reference object information indicates an identifier, in a geographic area, of each reference object in a second at least one reference object, and indicates a position of each reference object in the second at least one reference object. The second at least one reference object includes the first at least one reference object.

In a possible implementation, both the reference object information and the V2X message are periodically sent messages, and a sending frequency of the reference object information is not higher than a sending frequency of the V2X message.

In a possible implementation, the second at least one reference object is the first at least one reference object.

In a possible implementation, the V2X message is a periodically non-repeated message, and the reference object information is a periodically repeated message.

In a possible implementation, the reference object information includes first reference object information and second reference object information, and the first reference object information and the second reference object information are sent in packets. The first reference object information indicates an identifier, in the geographic area, of each reference object in a third at least one reference object, and indicates a position of each reference object in the third at least one reference object, the second reference object information indicates an identifier, in the geographic area, of each reference object in a fourth at least one reference object, and indicates a position of each reference object in the fourth at least one reference object. The second at least one reference object includes the third at least one reference object and the fourth at least one reference object.

In a possible implementation, the reference object information further indicates at least one of the following content: current version information, previous version information, an update status of each reference object, a type of each reference object, a priority of each reference object, position precision of each reference object, confidence of each reference object, a map element associated with each reference object, and an identifier of the geographic area.

The communication apparatus provided in this embodiment may be configured to perform the communication method performed by a transmitter in any one of the foregoing method embodiments. Implementation principles and technical effects thereof are similar. Details are not described herein again.

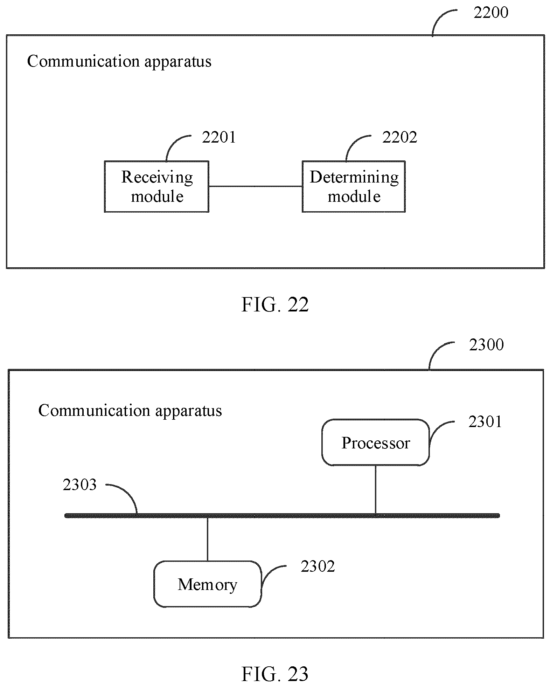

FIG. 22 is a schematic diagram of a structure of another communication apparatus according to an embodiment of this application. The communication apparatus provided in this embodiment may be a cloud device, a road side device, or a terminal device. The cloud device may be, for example, a map server, or a software module, a hardware module, or a chip in the map server. The road side device may be, for example, a road side unit, or a software module, a hardware module, or a chip in the road side unit. The terminal device is, for example, a vehicle, or a software module, a hardware module, or a chip in the vehicle.

As shown in FIG. 22, a communication apparatus 2200 provided in this embodiment may include a receiving module 2201 and a determining module 2202. The receiving module 2201 is configured to receive a V2X message, where the V2X message includes reference object indication information and position indication information. The reference object indication information indicates a first at least one reference object, and the position indication information indicates a position of a target object relative to the first at least one reference object. The determining module 2202 is configured to determine target position information of the target object based on the reference object indication information and the position indication information.

The reference object indication information includes first reference object indication information and second reference object indication information. The first reference object indication information indicates a first reference object, and the second reference object indication information indicates a second reference object. The position indication information includes first position information and second position information. The first position information indicates a position of the target object relative to the first reference object, and the second position information indicates a position of the target object relative to the second reference object.

In a possible implementation, the target object is an event. The position indication information includes first area information and second area information. The first area information indicates a first geographic area in which the event occurs, and the second area information indicates a second geographic area affected by the event.

In a possible implementation, the V2X message further includes reference object information. The reference object information indicates an identifier, in a geographic area, of each reference object in a second at least one reference object, and indicates a position of each reference object in the second at least one reference object. The second at least one reference object includes the first at least one reference object.

In a possible implementation, the receiving module 2201 is further configured to: receive reference object information. The reference object information includes reference object information. The reference object information indicates an identifier, in a geographic area, of each reference object in a second at least one reference object, and indicates a position of each reference object in the second at least one reference object. The second at least one reference object includes the first at least one reference object.

In a possible implementation, both the reference object information and the V2X message are periodically sent messages, and a sending frequency of the reference object information is not higher than a sending frequency of the V2X message.

In a possible implementation, the second at least one reference object is the first at least one reference object.

In a possible implementation, the V2X message is a periodically non-repeated message, and the reference object information is a periodically repeated message.

In a possible implementation, the reference object information includes first reference object information and second reference object information, and the first reference object information and the second reference object information are received in packets. The first reference object information indicates an identifier, in the geographic area, of each reference object in a third at least one reference object, and indicates a position of each reference object in the third at least one reference object, the second reference object information indicates an identifier, in the geographic area, of each reference object in a fourth at least one reference object, and indicates a position of each reference object in the fourth at least one reference object. The second at least one reference object includes the third at least one reference object and the fourth at least one reference object.

In a possible implementation, the reference object information further indicates at least one of the following content: current version information, previous version information, an update status of each reference object, a type of each reference object, a priority of each reference object, position precision of each reference object, confidence of each reference object, a map element associated with each reference object, and an identifier of the geographic area.

In a possible implementation, the determining module 2202 is specifically configured to: determine the target position information of the target object based on the reference object indication information, the position indication information, and the reference object information.

In a possible implementation, the determining module 2202 is specifically configured to: determine a position of the first at least one reference object based on the reference object indication information and the reference object information; and determine the target position information of the target object based on the position of the first at least one reference object and the position indication information.

The communication apparatus provided in this embodiment may be configured to perform the communication method performed by a receiver in any one of the foregoing method embodiments. Implementation principles and technical effects thereof are similar. Details are not described herein again.

FIG. 23 is a schematic diagram of a structure of still another communication apparatus according to an embodiment of this application. The communication apparatus provided in this embodiment may be a cloud device, a road side device, or a terminal device. The communication apparatus may be used as a transmitter or a receiver.

As shown in FIG. 23, a communication apparatus 2300 provided in this embodiment includes a processor 2301 and a memory 2302. The processor 2301 may communicate with the memory 2302. For example, the processor 2301 and the memory 2302 communicate with each other by using a communication bus 2303. The memory 2302 stores a computer program, and the processor 2301 runs the computer program to perform the communication method performed by the transmitter in any one of the foregoing method embodiments or the communication method performed by the receiver in any one of the foregoing method embodiments. Implementation principles and technical effects thereof are similar. Details are not described herein again.

The processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), or the like. The general-purpose processor may be a microprocessor, or the processor may be any conventional processor or the like. The steps of the methods disclosed with reference to this application may be directly implemented by a hardware processor, or may be implemented by a combination of hardware and software modules in a processor.

An embodiment of this application further provides a vehicle. The vehicle includes a communication apparatus. The communication apparatus may be the communication apparatus shown in FIG. 21, FIG. 22, or FIG. 23. Implementation principles and technical effects thereof are similar. Details are not described herein again.

An embodiment of this application further provides a computer-readable storage medium. The computer-readable storage medium stores a computer program. When the computer program is run, the communication method performed by a transmitter in any one of the foregoing method embodiments is implemented, or the communication method performed by a receiver in any one of the foregoing method embodiments is implemented. Implementation principles and technical effects thereof are similar. Details are not described herein again.

An embodiment of this application further provides a computer program product. The computer program product includes a computer program. When the computer program is run, the communication method performed by a transmitter in any one of the foregoing method embodiments is implemented, or the communication method performed by a receiver in any one of the foregoing method embodiments is implemented. Implementation principles and technical effects thereof are similar. Details are not described herein again.

All or some of the steps of the foregoing method embodiments may be implemented by a program instructing related hardware. The foregoing program may be stored in a computer-readable memory. When the program is executed, the steps of the methods in embodiments are performed. The memory (storage medium) includes: a read-only memory (English: read-only memory, ROM for short), a RAM, a flash memory, a hard disk, a solid state disk, a magnetic tape (English: magnetic tape), a floppy disk (English: floppy disk), an optical disc (English: optical disc), and any combination thereof.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable data processing device to generate a machine, so that the instructions executed by the computer or the processing unit of the another programmable data processing device generate an apparatus for implementing a specified function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

The invention is defined by the independent claims. Further embodiments are given by the dependent claims.

## Claims

1. A communication method performed by a transmitter, wherein the transmitter is a cloud device, a road side device, or a terminal device, and the method comprises:
generating (S201, S301, S401) a V2X message, wherein the V2X message comprises reference object indication information and position indication information, the reference object indication information indicates a first plurality of reference objects, and the position indication information indicates a position of a target object relative to the first plurality of reference objects; and
sending (S202, S302, S403) the V2X message to a receiver, wherein the receiver is a cloud device, a road side device, or a terminal device;
wherein the reference object indication information comprises first reference object indication information and second reference object indication information, the first reference object indication information indicates a first reference object, the second reference object indication information indicates a second reference object, the position indication information comprises first position information and second position information, the first position information indicates a position of the target object relative to the first reference object, and the second position information indicates a position of the target object relative to the second reference object.

2. The method according to claim 1, wherein the target object is an event, the position indication information comprises first area information and second area information, the first area information indicates a first geographic area in which the event occurs, and the second area information indicates a second geographic area affected by the event.

3. The method according to claim 1 or 2, wherein the V2X message further comprises reference object information, the reference object information indicates an identifier, in a geographic area, of each reference object in a second plurality of reference objects, and indicates a position of each reference object in the second plurality of reference objects, and the second plurality of reference objects comprises the first plurality of reference objects.

4. The method according to claim 1 or 2, wherein the method further comprises:
sending (S402) reference object information to the receiver, wherein the reference object information indicates an identifier, in a geographic area, of each reference object in a second plurality of reference objects, and indicates a position of each reference object in the second plurality of reference objects, and the second plurality of reference objects comprises the first plurality of reference objects.

5. The method according to claim 4, wherein both the reference object information and the V2X message are periodically sent messages, and a sending frequency of the reference object information is not higher than a sending frequency of the V2X message.

6. The method according to claim 5, wherein the second plurality of reference objects is the first plurality of reference objects.

7. The method according to claim 5, wherein the V2X message is a periodically non-repeated message, and the reference object information is a periodically repeated message.

8. A communication method performed by a receiver, wherein the receiver is a cloud device, a road side device, or a terminal device, and the method comprises:
receiving (S202, S302, S403) a V2X message from a transmitter, wherein the transmitter is a cloud device, a road side device, or a terminal device, and the V2X message comprises reference object indication information and position indication information, the reference object indication information indicates a first plurality of reference objects, and the position indication information indicates a position of a target object relative to the first plurality of reference objects; and
determining (S203, S303, S404) target position information of the target object based on the reference object indication information and the position indication information;
wherein the reference object indication information comprises first reference object indication information and second reference object indication information, the first reference object indication information indicates a first reference object, the second reference object indication information indicates a second reference object, the position indication information comprises first position information and second position information, the first position information indicates a position of the target object relative to the first reference object, and the second position information indicates a position of the target object relative to the second reference object.

9. The method according to claim 8, wherein the target object is an event, the position indication information comprises first area information and second area information, the first area information indicates a first geographic area in which the event occurs, and the second area information indicates a second geographic area affected by the event.

10. The method according to claim 8 or 9, wherein the V2X message further comprises reference object information, the reference object information indicates an identifier, in a geographic area, of each reference object in a second plurality of reference objects, and indicates a position of each reference object in the second plurality of reference objects, and the second plurality of reference objects comprises the first plurality of reference objects.

11. The method according to claim 8 or 9, wherein the method further comprises:
receiving (S402) reference object information from the transmitter, wherein the reference object information indicates an identifier, in a geographic area, of each reference object in a second plurality of reference objects, and indicates a position of each reference object in the second plurality of reference objects, and the second plurality of reference objects comprises the first plurality of reference objects.

12. The method according to claim 11, wherein both the reference object information and the V2X message are periodically sent messages, and a sending frequency of the reference object information is not higher than a sending frequency of the V2X message.

13. The method according to claim 11 or 12, wherein the reference object information comprises first reference object information and second reference object information, and the first reference object information and the second reference object information are received in packets; and
the first reference object information indicates an identifier, in the geographic area, of each reference object in a third set of reference objects, and indicates a position of each reference object in the third set of reference objects, the second reference object information indicates an identifier, in the geographic area, of each reference object in a fourth set of reference objects, and indicates a position of each reference object in the fourth set of reference objects, and the second plurality of reference objects comprises the third set of reference objects and the fourth set of reference objects.

14. The method according to any one of claims 10 to 13, wherein the reference object information further indicates at least one of the following content:
current version information;
previous version information;
an update status of each reference object;
a type of each reference object;
a priority of each reference object;
position precision of each reference object;
confidence of each reference object;
a map element associated with each reference object; and
an identifier of the geographic area.

15. The method according to any one of claims 10 to 14, wherein the determining target position information of the target object based on the reference object indication information and the position indication information comprises:
determining (S404) the target position information of the target object based on the reference object indication information, the position indication information, and the reference object information.

16. The method according to claim 15, wherein the determining (S404) the target position information of the target object based on the reference object indication information, the position indication information, and the reference object information comprises:
determining a position of the first plurality of reference objects based on the reference object indication information and the reference object information; and
determining the target position information of the target object based on the position of the first plurality of reference objects and the position indication information.

17. A communication apparatus, comprising units configured to perform the steps in the method according to any one of claims 1 to 16.

18. A computer-readable storage medium, comprising a program, wherein when the program is executed by a communication apparatus, the method according to any one of claims 1 to 16 is performed.

## Patentansprüche

1. Kommunikationsverfahren, das durch einen Sender durchgeführt wird, wobei der Sender eine Cloud-Vorrichtung, eine Straßenrandvorrichtung oder eine Endgerätevorrichtung ist und das Verfahren Folgendes umfasst:
Erzeugen (S201, S301, S401) einer V2X-Nachricht, wobei die V2X-Nachricht Referenzobjektangabeinformationen und Positionsangabeinformationen umfasst, die Referenzobjektangabeinformationen eine erste Vielzahl von Referenzobjekten angeben und die Positionsangabeinformationen eine Position eines Zielobjekts relativ zu der ersten Vielzahl von Referenzobjekten angeben; und
Senden (S202, S302, S403) der V2X-Nachricht an einen Empfänger, wobei der Empfänger eine Cloud-Vorrichtung, eine Straßenrandvorrichtung oder eine Endgerätevorrichtung ist;
wobei die Referenzobjektangabeinformationen erste Referenzobjektangabeinformationen und zweite Referenzobjektangabeinformationen umfassen, die ersten Referenzobjektangabeinformationen ein erstes Referenzobjekt angeben, die zweiten Referenzobjektangabeinformationen ein zweites Referenzobjekt angeben, die Positionsangabeinformationen erste Positionsinformationen und zweite Positionsinformationen umfassen, die ersten Positionsinformationen eine Position des Zielobjekts relativ zu dem ersten Referenzobjekt angeben und die zweiten Positionsinformationen eine Position des Zielobjekts relativ zu dem zweiten Referenzobjekt angeben.

2. Verfahren nach Anspruch 1, wobei das Zielobjekt ein Ereignis ist, die Positionsangabeinformationen erste Bereichsinformationen und zweite Bereichsinformationen umfassen, die ersten Bereichsinformationen einen ersten geographischen Bereich angeben, in dem das Ereignis auftritt, und die zweiten Bereichsinformationen einen zweiten geographischen Bereich angeben, der von dem Ereignis betroffen ist.

3. Verfahren nach Anspruch 1 oder 2, wobei die V2X-Nachricht ferner Referenzobjektinformationen umfasst, die Referenzobjektinformationen eine Kennung, in einem geographischen Bereich, jedes Referenzobjekts in einer zweiten Vielzahl von Referenzobjekten angeben und eine Position jedes Referenzobjekts in der zweiten Vielzahl von Referenzobjekten angeben und die zweite Vielzahl von Referenzobjekten die erste Vielzahl von Referenzobjekten umfasst.

4. Verfahren nach Anspruch 1 oder 2, wobei das Verfahren ferner Folgendes umfasst:
Senden (S402) von Referenzobjektinformationen an den Empfänger, wobei die Referenzobjektinformationen eine Kennung, in einem geographischen Bereich, jedes Referenzobjekts in einer zweiten Vielzahl von Referenzobjekten angeben und eine Position jedes Referenzobjekts in der zweiten Vielzahl von Referenzobjekten angeben und die zweite Vielzahl von Referenzobjekten die erste Vielzahl von Referenzobjekten umfasst.

5. Verfahren nach Anspruch 4, wobei sowohl die Referenzobjektinformationen als auch die V2X-Nachricht periodisch gesendete Nachrichten sind und eine Sendehäufigkeit der Referenzobjektinformationen nicht höher als eine Sendehäufigkeit der V2X-Nachricht ist.

6. Verfahren nach Anspruch 5, wobei die zweite Vielzahl von Referenzobjekten die erste Vielzahl von Referenzobjekten ist.

7. Verfahren nach Anspruch 5, wobei die V2X-Nachricht eine periodisch nicht wiederholte Nachricht ist und die Referenzobjektinformationen eine periodisch wiederholte Nachricht sind.

8. Kommunikationsverfahren, das durch einen Empfänger durchgeführt wird, wobei der Empfänger eine Cloud-Vorrichtung, eine Straßenrandvorrichtung oder eine Endgerätevorrichtung ist und das Verfahren Folgendes umfasst:
Empfangen (S202, S302, S403) einer V2X-Nachricht von einem Sender, wobei der Sender eine Cloud-Vorrichtung, eine Straßenrandvorrichtung oder eine Endgerätevorrichtung ist und die V2X-Nachricht Referenzobjektangabeinformationen und Positionsangabeinformationen umfasst, die Referenzobjektangabeinformationen eine erste Vielzahl von Referenzobjekten angeben und die Positionsangabeinformationen eine Position eines Zielobjekts relativ zu der ersten Vielzahl von Referenzobjekten angeben; und
Bestimmen (S203, S303, S404) von Zielpositionsinformationen des Zielobjekts basierend auf den Referenzobjektangabeinformationen und den Positionsangabeinformationen;
wobei die Referenzobjektangabeinformationen erste Referenzobjektangabeinformationen und zweite Referenzobjektangabeinformationen umfassen, die ersten Referenzobjektangabeinformationen ein erstes Referenzobjekt angeben, die zweiten Referenzobjektangabeinformationen ein zweites Referenzobjekt angeben, die Positionsangabeinformationen erste Positionsinformationen und zweite Positionsinformationen umfassen, die ersten Positionsinformationen eine Position des Zielobjekts relativ zu dem ersten Referenzobjekt angeben und die zweiten Positionsinformationen eine Position des Zielobjekts relativ zu dem zweiten Referenzobjekt angeben.

9. Verfahren nach Anspruch 8, wobei das Zielobjekt ein Ereignis ist, die Positionsangabeinformationen erste Bereichsinformationen und zweite Bereichsinformationen umfassen, die ersten Bereichsinformationen einen ersten geographischen Bereich angeben, in dem das Ereignis auftritt, und die zweiten Bereichsinformationen einen zweiten geographischen Bereich angeben, der von dem Ereignis betroffen ist.

10. Verfahren nach Anspruch 8 oder 9, wobei die V2X-Nachricht ferner Referenzobjektinformationen umfasst, die Referenzobjektinformationen eine Kennung, in einem geographischen Bereich, jedes Referenzobjekts in einer zweiten Vielzahl von Referenzobjekten angeben und eine Position jedes Referenzobjekts in der zweiten Vielzahl von Referenzobjekten angeben und die zweite Vielzahl von Referenzobjekten die erste Vielzahl von Referenzobjekten umfasst.

11. Verfahren nach Anspruch 8 oder 9, wobei das Verfahren ferner Folgendes umfasst:
Empfangen (S402) von Referenzobjektinformationen von dem Sender, wobei die Referenzobjektinformationen eine Kennung, in einem geographischen Bereich, jedes Referenzobjekts in einer zweiten Vielzahl von Referenzobjekten angeben und eine Position jedes Referenzobjekts in der zweiten Vielzahl von Referenzobjekten angeben und die zweite Vielzahl von Referenzobjekten die erste Vielzahl von Referenzobjekten umfasst.

12. Verfahren nach Anspruch 11, wobei sowohl die Referenzobjektinformationen als auch die V2X-Nachricht periodisch gesendete Nachrichten sind und eine Sendehäufigkeit der Referenzobjektinformationen nicht höher als eine Sendehäufigkeit der V2X-Nachricht ist.

13. Verfahren nach Anspruch 11 oder 12, wobei die Referenzobjektinformationen erste Referenzobjektinformationen und zweite Referenzobjektinformationen umfassen und die ersten Referenzobjektinformationen und die zweiten Referenzobjektinformationen in Paketen empfangen werden; und
die ersten Referenzobjektinformationen eine Kennung, in einem geographischen Bereich, jedes Referenzobjekts in einem dritten Satz von Referenzobjekten angeben und eine Position jedes Referenzobjekts in dem dritten Satz von Referenzobjekten angeben, die zweiten Referenzobjektinformationen eine Kennung, in dem geographischen Bereich, jedes Referenzobjekts in einem vierten Satz von Referenzobjekten angeben und eine Position jedes Referenzobjekts in dem vierten Satz von Referenzobjekten angeben und die zweite Vielzahl von Referenzobjekten den dritten Satz von Referenzobjekten und den vierten Satz von Referenzobjekten umfasst.

14. Verfahren nach einem der Ansprüche 10 bis 13, wobei die Referenzobjektinformationen ferner mindestens einen der folgenden Inhalte angeben:
Informationen zur aktuellen Version;
Informationen zu vorherigen Versionen;
einen aktualisierten Status jedes Referenzobjekts;
einen Typ jedes Referenzobjekts;
eine Priorität jedes Referenzobjekts;
eine Positionsgenauigkeit jedes Referenzobjekts;
Konfidenz jedes Referenzobjekts;
ein mit jedem Referenzobjekt assoziiertes Kartenelement; und
eine Kennung des geographischen Bereichs.

15. Verfahren nach einem der Ansprüche 10 bis 14, wobei das Bestimmen von Zielpositionsinformationen des Zielobjekts basierend auf den Referenzobjektangabeinformationen und den Positionsangabeinformationen Folgendes umfasst:
Bestimmen (S404) der Zielpositionsinformationen des Zielobjekts basierend auf den Referenzobjektangabeinformationen, den Positionsangabeinformationen und den Referenzobjektinformationen.

16. Verfahren nach Anspruch 15, wobei das Bestimmen (S404) der Zielpositionsinformationen des Zielobjekts basierend auf den Referenzobjektangabeinformationen, den Positionsangabeinformationen und den Referenzobjektinformationen Folgendes umfasst:
Bestimmen einer Position der ersten Vielzahl von Referenzobjekten basierend auf den Referenzobjektangabeinformationen und den Referenzobjektinformationen; und
Bestimmen der Zielpositionsinformationen des Zielobjekts basierend auf der Position der ersten Vielzahl von Referenzobjekten und den Positionsangabeinformationen.

17. Kommunikationseinrichtung, die Einheiten umfasst, die dazu ausgelegt sind, die Schritte in dem Verfahren nach einem der Ansprüche 1 bis 16 durchzuführen.

18. Computerlesbares Speichermedium, das ein Programm umfasst, wobei bei Ausführung des Programms durch eine Kommunikationseinrichtung das Verfahren nach einem der Ansprüche 1 bis 16 durchgeführt wird.

## Revendications

1. Procédé de communication réalisé par un émetteur, l'émetteur étant un dispositif dans le cloud, un dispositif en bord de route, ou un dispositif terminal, et le procédé comprenant :
la génération (S201, S301, S401) d'un message V2X, le message V2X comprenant des informations d'indication d'objet de référence et des informations d'indication de position, les informations d'indication d'objet de référence indiquant une première pluralité d'objets de référence, et les informations d'indication de position indiquant une position d'un objet cible par rapport à la première pluralité d'objets de référence ; et
l'envoi (S202, S302, S403) du message V2X à un récepteur, le récepteur étant un dispositif dans le cloud, un dispositif en bord de route, ou un dispositif terminal ;
dans lequel les informations d'indication d'objet de référence comprennent des premières informations d'indication d'objet de référence et des deuxièmes informations d'indication d'objet de référence, les premières informations d'indication d'objet de référence indiquent un premier objet de référence, les deuxièmes informations d'indication d'objet de référence indiquent un deuxième objet de référence, les informations d'indication de position comprennent des premières informations de position et des deuxièmes informations de position, les premières informations de position indiquent une position de l'objet cible par rapport au premier objet de référence, et les deuxièmes informations de position indiquent une position de l'objet cible par rapport au deuxième objet de référence.

2. Procédé selon la revendication 1, dans lequel l'objet cible est un événement, les informations d'indication de position comprennent des premières informations de zone et des deuxièmes informations de zone, les premières informations de zone indiquent une première zone géographique dans laquelle l'événement se produit, et les deuxièmes informations de zone indiquent une deuxième zone géographique affectée par l'événement.

3. Procédé selon la revendication 1 ou 2, dans lequel le message V2X comprend en outre des informations d'objet de référence, les informations d'objet de référence indiquent un identifiant, dans une zone géographique, de chaque objet de référence dans une deuxième pluralité d'objets de référence, et indiquent une position de chaque objet de référence dans la deuxième pluralité d'objets de référence, et la deuxième pluralité d'objets de référence comprend la première pluralité d'objets de référence.

4. Procédé selon la revendication 1 ou 2, le procédé comprenant en outre :
l'envoi (S402) d'informations d'objet de référence au récepteur, les informations d'objet de référence indiquant un identifiant, dans une zone géographique, de chaque objet de référence dans une deuxième pluralité d'objets de référence, et indiquant une position de chaque objet de référence dans la deuxième pluralité d'objets de référence, et la deuxième pluralité d'objets de référence comprenant la première pluralité d'objets de référence.

5. Procédé selon la revendication 4, dans lequel les informations d'objet de référence et le message V2X sont tous deux des messages envoyés périodiquement, et une fréquence d'envoi des informations d'objet de référence n'est pas supérieure à une fréquence d'envoi du message V2X.

6. Procédé selon la revendication 5, dans lequel la deuxième pluralité d'objets de référence est la première pluralité d'objets de référence.

7. Procédé selon la revendication 5, dans lequel le message V2X est un message non répété périodiquement, et les informations d'objet de référence sont un message répété périodiquement.

8. Procédé de communication réalisé par un récepteur, le récepteur étant un dispositif dans le cloud, un dispositif en bord de route, ou un dispositif terminal, et le procédé comprenant :
la réception (S202, S302, S403) d'un message V2X provenant d'un émetteur, l'émetteur étant un dispositif dans le cloud, un dispositif en bord de route, ou un dispositif terminal, et le message V2X comprenant des informations d'indication d'objet de référence et des informations d'indication de position, les informations d'indication d'objet de référence indiquant une première pluralité d'objets de référence, et les informations d'indication de position indiquant une position d'un objet cible par rapport à la première pluralité d'objets de référence ; et
la détermination (S203, S303, S404) d'informations de position cible de l'objet cible sur la base des informations d'indication d'objet de référence et des informations d'indication de position ;
dans lequel les informations d'indication d'objet de référence comprennent des premières informations d'indication d'objet de référence et des deuxièmes informations d'indication d'objet de référence, les premières informations d'indication d'objet de référence indiquent un premier objet de référence, les deuxièmes informations d'indication d'objet de référence indiquent un deuxième objet de référence, les informations d'indication de position comprennent des premières informations de position et des deuxièmes informations de position, les premières informations de position indiquent une position de l'objet cible par rapport au premier objet de référence, et les deuxièmes informations de position indiquent une position de l'objet cible par rapport au deuxième objet de référence.

9. Procédé selon la revendication 8, dans lequel l'objet cible est un événement, les informations d'indication de position comprennent des premières informations de zone et des deuxièmes informations de zone, les premières informations de zone indiquent une première zone géographique dans laquelle l'événement se produit, et les deuxièmes informations de zone indiquent une deuxième zone géographique affectée par l'événement.

10. Procédé selon la revendication 8 ou 9, dans lequel le message V2X comprend en outre des informations d'objet de référence, les informations d'objet de référence indiquent un identifiant, dans une zone géographique, de chaque objet de référence dans une deuxième pluralité d'objets de référence, et indiquent une position de chaque objet de référence dans la deuxième pluralité d'objets de référence, et la deuxième pluralité d'objets de référence comprend la première pluralité d'objets de référence.

11. Procédé selon la revendication 8 ou 9, le procédé comprenant en outre :
la réception (S402) d'informations d'objet de référence provenant de l'émetteur, les informations d'objet de référence indiquant un identifiant, dans une zone géographique, de chaque objet de référence dans une deuxième pluralité d'objets de référence, et indiquant une position de chaque objet de référence dans la deuxième pluralité d'objets de référence, et la deuxième pluralité d'objets de référence comprenant la première pluralité d'objets de référence.

12. Procédé selon la revendication 11, dans lequel les informations d'objet de référence et le message V2X sont tous deux des messages envoyés périodiquement, et une fréquence d'envoi des informations d'objet de référence n'est pas supérieure à une fréquence d'envoi du message V2X.

13. Procédé selon la revendication 11 ou 12, dans lequel les informations d'objet de référence comprennent des premières informations d'objet de référence et des deuxièmes informations d'objet de référence, et les premières informations d'objet de référence et les deuxièmes informations d'objet de référence sont reçues par paquets ; et
les premières informations d'objet de référence indiquent un identifiant, dans la zone géographique, de chaque objet de référence dans un troisième ensemble d'objets de référence, et indiquent une position de chaque objet de référence dans le troisième ensemble d'objets de référence, les deuxièmes informations d'objet de référence indiquent un identifiant, dans la zone géographique, de chaque objet de référence dans un quatrième ensemble d'objets de référence, et indiquent une position de chaque objet de référence dans le quatrième ensemble d'objets de référence, et la deuxième pluralité d'objets de référence comprend le troisième ensemble d'objets de référence et le quatrième ensemble d'objets de référence.

14. Procédé selon l'une quelconque des revendications 10 à 13, dans lequel les informations d'objet de référence indiquent en outre au moins un des contenus suivants :
des informations de version actuelle ;
des informations de version précédente ;
un état de mise à jour de chaque objet de référence ;
un type de chaque objet de référence ;
une priorité de chaque objet de référence ;
une précision de position de chaque objet de référence ;
une confiance de chaque objet de référence ;
un élément cartographique associé à chaque objet de référence ; et
un identifiant de la zone géographique.

15. Procédé selon l'une quelconque des revendications 10 à 14, dans lequel la détermination d'informations de position cible de l'objet cible sur la base des informations d'indication d'objet de référence et des informations d'indication de position comprend :
la détermination (S404) des informations de position cible de l'objet cible sur la base des informations d'indication d'objet de référence, des informations d'indication de position, et des informations d'objet de référence.

16. Procédé selon la revendication 15, dans lequel la détermination (S404) des informations de position cible de l'objet cible sur la base des informations d'indication d'objet de référence, des informations d'indication de position, et des informations d'objet de référence comprend :
la détermination d'une position de la première pluralité d'objets de référence sur la base des informations d'indication d'objet de référence et des informations d'objet de référence ; et
la détermination des informations de position cible de l'objet cible sur la base de la position de la première pluralité d'objets de référence et des informations d'indication de position.

17. Appareil de communication, comprenant des unités configurées pour réaliser les étapes du procédé selon l'une quelconque des revendications 1 à 16.

18. Support de stockage lisible par ordinateur, comprenant un programme qui, lorsqu'il est exécuté par un appareil de communication, met en œuvre le procédé selon l'une quelconque des revendications 1 à 16.
